# EUROPÄISCHE PATENTSCHRIFT

(11) **EP 3 449 638 B1**
(45) Veröffentlichungstag und Bekanntmachung des Hinweises auf die Patenterteilung: **18.11.2020**
(21) Anmeldenummer: 17717079.2
(22) Anmeldetag: 04.04.2017
(51) Int. Cl.: H04Q 9/00, G01D 4/00

(54) **VERFAHREN ZUR KOMMUNIKATION ZWISCHEN WENIGSTENS EINER ZÄHLEREINRICHTUNG UND EINER FLUGEINRICHTUNG**
METHOD FOR COMMUNICATION BETWEEN AT LEAST A METER DEVICE AND A FLYING DEVICE
PROCÉDÉ DE COMMUNICATION ENTRE AU MOINS UN COMPTEUR ET UN DISPOSITIF VOLANT

(30) Priorität: 30.04.2016 DE 102016005403
(43) Veröffentlichungstag der Anmeldung: 06.03.2019
(73) Patentinhaber: Diehl Metering Systems GmbH, 90451 Nürnberg (DE); Diehl Metering GmbH, 91522 Ansbach (DE)
(72) Erfinder: PETKOV, Hristo, 90425 Nürnberg (DE); LAUTENBACHER, Thomas, 91058 Erlangen (DE); KAUPPERT, Thomas, 90455 Nürnberg (DE); GOTTSCHALK, Klaus, 90610 Winkelhaid (DE); MZYK, Raphael, 91126 Kammerstein (DE); RÖHRLE, Philip, 91522 Ansbach (DE); TRÄNKLER, Michael, 91186 Büchenback (DE)
(74) Vertreter: Diehl Patentabteilung
(86) Internationale Anmeldenummer: PCT/EP2017/000413
(87) Internationale Veröffentlichungsnummer: WO 2017/186334

(56) Entgegenhaltungen:
- US-A1- 2001 038 342
- US-A1- 2005 184 882
- US-A1- 2015 163 849
- NETO JOSE RODRIGUES TORRES ET AL: "Towards the Use of Unmanned Aerial Vehicles for Automatic Power Meter Readings", 2015 IEEE INTERNATIONAL CONFERENCE ON COMPUTER AND INFORMATION TECHNOLOGY; UBIQUITOUS COMPUTING AND COMMUNICATIONS; DEPENDABLE, AUTONOMIC AND SECURE COMPUTING; PERVASIVE INTELLIGENCE AND COMPUTING, IEEE, 26. Oktober 2015 (2015-10-26), Seiten 379-386, XP032835990, DOI: 10.1109/CIT/IUCC/DASC/PICOM.2015.54 [gefunden am 2015-12-22]

## Beschreibung

Die Erfindung betrifft ein Verfahren zur Kommunikation zwischen wenigstens einer Zählereinrichtung und einer Flugeinrichtung, wobei die Zählereinrichtung zum Erfassen eines Verbrauchs und/oder zum Sammeln erfasster Verbrauchsdaten ausgebildet ist. Daneben betrifft die Erfindung eine Flugeinrichtung.

Im Rahmen einer Energie- oder Wasserversorgung sollen häufig Zähler einer Vielzahl von Verbrauchern ausgelesen werden. Um eine kosteneffiziente Auslesung zu ermöglichen, sind Fernausleseverfahren bekannt, bei denen eine Erfassungseinrichtung in die Nähe der Zähler gebracht wird und die Zählerinformation über Funk von einem Zähler oder mehreren Zählern empfängt. Eine derartige Erfassungseinrichtung kann beispielsweise durch einen Ableser getragen oder an Bord eines Kraftfahrzeugs entlang einer Straße transportiert werden.

Nachteilig an einer derartigen Fernerfassung ist, dass nicht für alle Zählereinrichtungen ein befriedigender Empfang der Zählerinformationen erreicht werden kann. Sollen beispielsweise Informationen von geographisch abgelegenen Zählern, beispielsweise auf Inseln, in Wäldern oder an Küsten erfasst werden, erfordert dies einen erheblichen zeitlichen Aufwand. Zudem ist es bei einem Walk-by- bzw. Drive-by-Zähler häufig nicht möglich, Zählerinformationen von Zählern in höheren Stockwerken von Hochhäusern zu empfangen. Zur Lösung dieser Probleme ist es bekannt, flugfähige Erfassungseinrichtungen zur Fernauslesung von Zählerdaten zu nutzen. Beispielsweise ist bekannt, mit Modell-Hubschraubern mit darauf angeordnetem Empfänger feste Ablesepositionen abzufliegen, an denen Zählerdaten empfangen werden sollen. Bei einem derartigen Abfliegen fester Positionen wird jedoch nicht immer eine ausreichende Empfangsqualität erreicht, um die Zählerinformation zu empfangen. In diesem Fall muss die gesamte Ableseroute neu geflogen werden oder es muss eine neue Ableseroute festgelegt werden. Dies erhöht den Aufwand der Zählerablesung.

Ein Verfahren zum Auslesen von Zählern mithilfe einer Flugeinrichtung ist aus der Druckschrift US 2001/0 038 342 A1 bekannt. Die Flugeinrichtung empfängt Radiowellen der Zähler und überträgt diese Informationen an eine Zentraleinrichtung. Ein Flugpfad der Flugeinrichtung wird in Abhängigkeit der bekannten Zählerpositionen und Ausrichtungen von deren Antennen geplant, wobei auch Hindernisse berücksichtigt werden können. Bei hoch fliegenden Flugeinrichtungen kann zudem die Richtcharakteristik der Antenne angepasst werden, um sie auf den konkreten Ort am Grund auszurichten.

Der Erfindung liegt daher die Aufgabe zugrunde, ein Verfahren zur Kommunikation mit einer Zählereinrichtung anzugeben, dass eine demgegenüber verbesserte Kommunikationsqualität und Zuverlässigkeit ermöglicht.

Die Aufgabe wird erfindungsgemäß durch ein Verfahren der eingangs genannten Art gelöst, wobei die Flugeinrichtung die folgenden Schritte durchführt:
a) Bewegung der Flugeinrichtung zu einer der Zählereinrichtung zugeordneten, vorgegebenen Zielposition,
b) Empfang von Empfangssignalen auf einem der Zählereinrichtung zugeordneten Funkkanal durch eine Empfangseinrichtung der Flugeinrichtung und Ermitteln wenigstens einer eine Kommunikationsqualität auf dem Funkkanal betreffenden Qualitätsinformation in Abhängigkeit der Empfangssignale, wobei bei Nichterfüllung einer Qualitätsbedingung, deren Erfüllung von der Qualitätsinformation abhängt, der Empfang von Empfangssignalen und die Ermittlung der Qualitätsinformation wiederholt werden, nachdem ein Kommunikationsprotokoll zur Kommunikation mit der Zählereinrichtung gewechselt wurde und/oder während eine Position der Flugeinrichtung und/oder eine Richtcharakteristik der Empfangseinrichtung verändert werden, bis die Qualitätsbedingung oder eine Abbruchbedingung erfüllt ist, und bei Erfüllung der Qualitätsbedingung
c) Erfassen wenigstens einer durch die Zählereinrichtung gesendeten Zählerinformation durch Auswertung der Empfangssignale und/oder Senden einer Steuernachricht zur Steuerung des Betriebs der Zählereinrichtung an die Zählereinrichtung.

Erfindungsgemäß wird somit vorgeschlagen, im Rahmen der Erfassung der Zählerinformation bzw. der Übertragung von Steuernachrichten eine Kommunikationsqualität auf dem der Zählereinrichtung zugeordneten Funkkanal auszuwerten und bei Bedarf eine Position der Flugeinrichtung und/oder eine Richtcharakteristik anzupassen und/oder ein genutztes Kommunikationsprotokoll zu wechseln, um die Kommunikationsqualität zu verbessern, bevor die Zählerinformation erfasst bzw. die Steuernachricht übertragen wird. Im Rahmen des erfindungsgemäßen Verfahrens kann somit dynamisch auf die Kommunikationsqualität und somit auf Faktoren, die Einfluss auf die Kommunikationsqualität haben, reagiert werden. So kann beispielsweise reagiert werden, wenn Umfeldobjekte einen Empfang von Signalen einer Zählereinrichtung blockieren oder wenn ein Funkkanal durch Störquellen blockiert ist. Durch eine Anpassung der Position der Flugeinrichtung bzw. der Richtcharakteristik kann die Empfangsqualität für einen oder mehrere Zähler optimiert werden und Störquellen können ausgeblendet werden. Die Qualitätsbedingung kann aus mehreren logisch verknüpften Teilbedingungen bestehen, die insbesondere verschiedene der Qualitätsinformationen auswerten.

Die Zählerinformation kann einen Verbrauch bzw. Verbrauchsdaten beschreiben, aber auch eine Statusinformation oder Ähnliches. Steuernachrichten können beispielsweise dazu dienen, eine Zählereinrichtung über die Flugeinrichtung zu konfigurieren oder ein Firmware-Update aufzuspielen.

Die Zählereinrichtung kann die Zählerinformation periodisch oder nach einer über Funk gesendeten Aufforderung der Flugeinrichtung senden. Die Flugeinrichtung kann diese Aufforderung insbesondere erst nach Erfüllung der Qualitätsbedingung oder nach Erfüllen einer Teilbedingung, beispielsweise bei Unterschreiten einer maximalen Kanallast, senden. Bei Erfüllung einer Abbruchbedingung kann zunächst keine Messung bzw. keine Übertragung der Steuernachricht für die Zählereinrichtung oder mehrere Zählereinrichtungen an der Zielposition erfolgen. Es ist möglich, dass die Flugeinrichtung zu einer Parkposition zurückfliegt und/oder zunächst eine andere Zielposition anfliegt, um Zählerinformationen anderer Zählereinrichtungen zu erfassen bzw. diese zu steuern. Eine Abbruchbedingung kann beispielsweise das Überschreiten eines Zeitgrenzwertes sein, der eine maximale Verweilzeit an einer Zielposition bzw. im Umfeld einer Zielposition beschreibt. Es ist auch möglich, dass die Abbruchbedingung eine Zustandsinformation der Flugeinrichtung, insbesondere einen Ladezustand von Batterien, auswertet.

Die Qualitätsinformation kann einen Summenleistungspegel aller Empfangssignale und/oder einen Zählerleistungspegel jener Empfangssignale, die von der Zählereinrichtung gesendet wurden, und/oder einen weiterer Leistungspegel weiterer Empfangssignale, die gegenüber den von der Zählereinrichtung gesendeten Empfangssignalen zeitlich und/oder spektral versetzt empfangen werden, und/oder ein Signal-zu-Rauschverhältnis und/oder eine Kanallast und/oder eine auf von der Zählereinrichtung gesendete Datenpakete bezogene Fehlerrate und/oder ein Maß für durch das genutzte Kommunikationsprotokoll korrigierbare Fehler in den Datenpaketen beschreiben.

Zur Unterscheidung zwischen den der Zählereinrichtung zugeordneten Signalpegeln und den Signalpegeln von Störquellen kann der zeitliche Verlauf des Summenleistungspegels ausgewertet werden. Ist beispielsweise ein mittlerer Abstand zwischen zwei Sendepulsen der Zählereinrichtung, die beispielsweise jeweils einem einzelnen Datenpaket oder einem Datentelegramm, das Zählerinformationen in einer bestimmten Datenstruktur zusammenfast, entsprechen, und/oder deren mittlere Länge bekannt, können entsprechende Strukturen in dem zeitlichen Verlauf des Summenleistungspegels erkannt und ausgewertet werden, um die Leistungsbeiträge zu unterscheiden. Es können auch bekannte Strukturen in dem Sendesignal der Zählereinrichtung, beispielsweise ein Pilot-Signal, erkannt werden, um einen Beginn und/oder ein Ende eines Sendevorgangs der Zählereinrichtung zu erkennen und dieses mit dem zeitlichen Verlauf des Summenleistungspegels zu korrelieren. Um auch Störungen durch ein übersprechen von im Frequenzband benachbarten Funkkanälen zu erkennen, kann es vorteilhaft sein, auch weitere Leistungspegel von spektral benachbarten weiteren Empfangssignalen, das heißt von Empfangssignalen auf benachbarten Frequenzen, auszuwerten.

Zur Bestimmung einer Kanallast wird vorzugsweise ermittelt, für welchen Zeitanteil eines vorgegebenen Messintervalls ein vorgegebener Referenzwert für den Gesamtsignalpegel überschritten wird. Alternativ könnte eine Kanallast auch ermittelt werden, indem der Gesamtsignalpegel über ein vorgegebenes Zeitintervall gemittelt wird.

Eine Fehlerrate kann ermittelt werden, wenn feststellbar ist, wie viele Datenpakete innerhalb eines vorgegebenen Zeitraums empfangen werden sollten. Diese Zahl kann mit einer Zahl von erfolgreich empfangenen bzw. decodierten Datenpaketen verglichen werden. Ein erfolgreicher Empfang kann beispielsweise durch eine Prüfsumme oder die Erkennung bestimmter vorgegebener Datenstrukturen ermittelt werden. Es kann bekannt sein, wie viele Pakete durch die Zählereinrichtung im Mittel gesendet werden. Es ist auch möglich, dass bestimmte Strukturen der Datenpakete, beispielsweise Pilot-Signale, auch dann erfassbar sind, wenn die Empfangsqualität für einen korrekten Empfang der Datenpakete nicht ausreicht. Die Anzahl der gesendeten Datenpakete kann somit auch dann korrekt ermittelt werden, wenn einige Datenpakete nicht korrekt empfangen werden. Es ist auch möglich, dass die Datenpakete jeweils eine Sequenznummer umfassen. Nach einem korrekten Empfang zweier Datenpakete kann in diesem Fall direkt ermittelt werden, wie viele Datenpakete nicht korrekt empfangen wurden.

Funkprotokolle ermöglichen häufig, beispielsweise auf der Bitübertragungsebene und/oder auf einer höheren Protokollebene, eine Fehlerkorrektur empfangener Daten. Die Korrektur kann eindeutig sein, es ist jedoch auch möglich, dass nur Wahrscheinlichkeiten für die Korrektheit der empfangenen Daten ermittelbar sind. In beiden Fällen ist es möglich, ein Maß für die korrigierbaren Fehler zu bestimmen, das zugleich auch ein Maß für die erreichte Empfangsqualität darstellt.

Die Qualitätsbedingung oder eine von mehreren Teilbedingungen, die zur Auswertung der Qualitätsbedingung logisch verknüpft werden, kann genau dann erfüllt sein, wenn innerhalb eines vorgegebenen Messintervalls der Summenleistungspegel und/oder der weitere Leistungspegel und/oder der Kehrwert des Signal-zu-Rauschverhältnisses und/oder die Kanallast für zumindest einen vorgegebenen Zeitanteil des Messintervalls kleiner als ein jeweiliger vorgegebener Referenzwert sind. Der Zeitanteil kann beispielsweise zwischen 10% und 40% des Messintervalls sein. Der Referenzwert für einen Summenleistungspegel kann beispielsweise zwischen -70 dBm und -90 dBm oder zwischen -50 dBm und -70 dBm sein.

In Abhängigkeit eines Umfeldmodells, das zumindest die jeweilige Position der wenigstens einen Zählereinrichtung beschreibt, kann ein Prognosewert für den Zählerleistungspegel ermittelt werden, wonach der Referenzwert in Abhängigkeit des Prognosewertes bestimmt wird. Vorzugsweise beschreibt das Umfeldmodell zusätzlich Umfeldobjekte, die den Zählerleistungspegel abschwächen können und/oder die Sendeleistungen der Zählereinrichtung bzw. der Zählereinrichtungen. Durch eine Steuereinrichtung der Flugeinrichtung oder durch eine externe Einrichtung kann eine für die momentane Position der Flugeinrichtung erwartete Empfangsleistung als Prognosewert berechnet werden. Im einfachsten Fall wird ausschließlich die Entfernung zu der jeweiligen Zählereinrichtung berücksichtigt. Vorzugsweise werden zusätzliche eine Abschwächung durch Umfeldobjekte und/oder die Richtcharakteristik der Empfangseinrichtung berücksichtigt. Befinden sich mehrere Zählereinrichtungen im Umfeld der Flugeinrichtung, so können deren Beiträge addiert werden. Alternativ kann z.B. nur die am weitesten von der Flugeinrichtung entfernteste Zählereinrichtung oder die Zählereinrichtung mit dem geringsten Leistungsbeitrag berücksichtigt werden. Der Prognosewert kann somit einen Leistungspegel eines Signals beschreiben, dass noch korrekt empfangen werden soll, um Zählerinformationen aller Zählereinrichtungen zu erfassen. Zu dem Prognosewert kann ein Offset addiert werden, um den Referenzwert zu ermitteln. Dies ermöglicht es, einen minimalen Signal-zu-Störabstand vorzugeben, der eingehalten werden soll.

Die Veränderung der Position der Flugeinrichtung kann derart erfolgen, dass während der Änderung der Position um eine halbe Wellenlänge eines zu empfangenen Empfangssignals mehrfach das Empfangssignal erfasst und ausgewertet wird. Dies ist insbesondere dann vorteilhaft, wenn das Empfangssignal oder ein Teil des Empfangssignals derart an Umfeldobjekten reflektiert wird, dass stehende Wellen resultieren. In diesem Fall können sich die reflektierten Wellen an einigen Positionen auslöschen, so dass kein Empfang möglich ist. Durch eine langsame Bewegung aus einem solchen Wellenknoten während die Qualitätsinformation überwacht wird, wird auch in diesem Fall ein zuverlässiger Empfang der Zählerinformation ermöglicht.

Das erfindungsgemäße Verfahren wird vorzugsweise zur Auslesung mehrerer Zählereinrichtungen genutzt. Hierbei kann jeder einzelnen Zählereinrichtung oder jeweils einer Gruppe von Zählereinrichtungen eine Zielposition zugeordnet werden. Die Zielpositionen können im Rahmen einer Routenplanung vorgegeben werden, wobei im Rahmen der Routenplanung aus einer Netzwerkplanung bekannte Zählerpositionen, Funktionen und Parameter, beispielsweise eine Sendeleistung der Zählereinrichtungen, berücksichtigt werden können.

Die Richtcharakteristik kann verändert werden, indem die Orientierung der Flugeinrichtung verändert wird. Dies ist zweckmäßig, wenn eine Empfangseinrichtung mit einer oder mehreren fest an der Flugeinrichtung angeordneten Richtantennen genutzt wird. Die Orientierung kann durch eine Rotation um eine Hochachse der Flugeinrichtung und/oder eine Neigung bezüglich eines Bodens angepasst werden.

Die Empfangseinrichtung kann mehrere Antennen aufweisen, wobei zur Ermittlung der Empfangssignale durch die Antennen empfangene Antennensignale zu einem Summensignal addiert werden, wobei die Richtcharakteristik durch eine Veränderung einer jeweiligen Phase und/oder einer jeweiligen Amplitude der Antennensignale in dem Summensignal verändert wird. Eine derartige Veränderung der Richtcharakteristik wird auch Beamforming genannt. Insbesondere kann ein digitales Beamforming genutzt werden, bei dem die Veränderung der Phase und/oder der Amplitude nach einer Analog-Digital-Umsetzung der jeweiligen Antennensignale erfolgt. Die Phasenschiebung kann durch eine Faltung mit einem Faltungssignal erfolgen, das heißt in Form eines sogenannten Finite-Impulse-Response-Filters. Durch die Vorgabe entsprechender Amplituden und/oder Phasen kann ein Array von Antennen als "künstliche" Richtantenne wirken.

Die Zählerinformation kann durch die Flugeinrichtung nach der Erfassung an eine Zentraleinrichtung gesendet werden und/oder die an die Zählereinrichtung gesendete Steuernachricht kann vorangehend durch die Flugeinrichtung von der Zentraleinrichtung empfangen werden. Die Kommunikation mit der Zentraleinrichtung kann über Mobilfunk, beispielsweise gemäß des GSM, LTE oder Edge-Standards, oder über W-LAN erfolgen. Hierbei kann eine Verschlüsselung des Mobilfunkstandards und/oder eine separate Verschlüsselung genutzt werden. Die Kommunikation kann direkt über ein Funknetz oder über wenigstens eine oder mehrere Flugeinrichtungen erfolgen, die ein Netzwerk bereitstellen. Durch die Bereitstellung eines Netzwerkes durch weitere Flugeinrichtungen kann eine Kommunikation mit der Zentraleinrichtung auch von Positionen aus erfolgen, in denen beispielsweise kein Mobilfunknetz verfügbar ist. Es ist möglich, dass die Zählerinformationen oder Steuernachrichten auf der Flugeinrichtung zwischengespeichert werden, insbesondere dann, wenn im Bereich der Zielposition keine Kommunikationsverbindung zur Zentraleinrichtung verfügbar ist. Die Zählerinformation kann zu einem späteren Zeitpunkt an die Zentraleinrichtung gesendet werden. Die Steuernachricht kann von der Zentraleinrichtung zu der Flugeinrichtung übertragen werden, bevor diese zu der Zielposition bewegt wird.

Beispielsweise kann die Flugeinrichtung in den Bereich einer Basisstation bewegt und dort insbesondere gelandet werden, um die Zählerinformation an die Basisstation bereitzustellen, die diese anschließend an die Zentraleinrichtung überträgt, oder um durch die Basisstation eine von der Zentraleinrichtung bereitgestellte Steuernachricht an die Flugeinrichtung zu übertragen. Die Datenübertragung zwischen der Flugeinrichtung und der Basisstation und/oder zwischen der Basisstation und der Zentraleinrichtung kann drahtgebunden oder drahtlos erfolgen. Insbesondere kann bei einem Landen der Flugeinrichtung an bzw. auf der Basisstation automatisch eine drahtgebundene Kommunikationsverbindung hergestellt werden, beispielsweise indem ein Abschnitt der Flugeinrichtung beim Landen in eine Ausnehmung der Basisstation eingreift oder umgekehrt, um eine insbesondere elektrische Verbindung zur Signalübertragung bereitzustellen. Die Basisstation kann ergänzend oder alternativ eine Energieversorgung zum Laden von Energiespeichern der Flugeinrichtung bereitstellen.

Im erfindungsgemäßen Verfahren können mehrere Flugeinrichtungen genutzt werden, wobei für wenigstens eine der Flugeinrichtungen das Senden der Zählerinformation an die Zentraleinrichtung und/oder das Empfangen der Steuernachricht von der Zentraleinrichtung indirekt über wenigstens eine als Netzwerkknoten dienende weitere der Flugeinrichtungen erfolgt. Hierdurch kann eine von anderweitigen Kommunikationsnetzen unabhängige Kommunikation über große Entfernungen erreicht werden.

Die Zählerinformation oder eine aus der Zählerinformation abgeleitete Information kann durch eine Ausgabeeinrichtung der Zentraleinrichtung an einen Benutzer bereitgestellt werden und/oder durch eine Benutzereingabe an einer Eingabeeinrichtung der Zentraleinrichtung kann das Senden der Steuernachricht über die Flugeinrichtung an die Zählereinrichtung ausgelöst werden. Insbesondere kann eine bidirektionale Kommunikation zwischen einem zentraleinrichtungsseitigen Benutzerarbeitsplatz und der Zählereinrichtung bereitgestellt werden, wobei die Kommunikation über eine oder mehrere der Flugeinrichtungen als Netzwerkknoten erfolgt. Die Kommunikation kann nahezu in Echtzeit erfolgen, womit einem Benutzer beispielsweise innerhalb von einer Minute oder innerhalb von einer oder von zehn Sekunden eine Rückmeldung der Zählereinrichtung auf übertragene Steuerbefehle ausgegeben werden kann. Dies ermöglicht eine dynamische Konfiguration der Zählereinrichtung, ein direktes Feedback an einen Nutzer, wobei beispielsweise ein aufgespieltes Firmwareupdate direkt getestet werden kann, und eine direkte Steuermöglichkeit, um beispielsweise bei Leckagen bestimmte Ventile schließen zu können.

Im erfindungsgemäßen Verfahren kann ein Flugbereich für die Flugeinrichtung vorgegeben werden, wobei die Bewegung der Flugeinrichtung zu der Zielposition und die Veränderung der Position der Flugeinrichtung derart gesteuert werden, dass sich die Flugeinrichtung stets innerhalb des Flugbereichs befindet. Durch eine derartige Steuerung können im erfindungsgemäßen Verfahren insbesondere gesetzliche Vorgaben leicht und zuverlässig umgesetzt werden. Beispielsweise kann eine Position der Flugeinrichtung erfasst werden und bei einer Annäherung an die Grenzen des Flugbereichs kann automatisch eine Bewegungseinrichtung der Flugeinrichtung angesteuert werden, um die Flugeinrichtung von der Grenze des Flugbereichs weg zu bewegen. Der Flugbereich kann derart vorgegeben werden, dass die Flughöhe der Flugeinrichtung auf eine Maximalhöhe, beispielsweise 200 m, 150 m, 100 m, 50 m oder 20 m, beschränkt wird. Der Flugbereich kann horizontal derart eingeschränkt sein, dass er sich oberhalb eines vorgegebenen Bodenbereichs, beispielsweise oberhalb eines bestimmten Grundstücks, erstreckt. Die horizontale Fläche kann geringer als 1 km², 10'000 m² oder 100 m² sein. Es können mehrere Flugeinrichtungen genutzt werden, wobei die den einzelnen Flugeinrichtungen zugeordneten Flugbereiche voneinander beabstandet sein können. Die Flugbereiche können insbesondere horizontal voneinander beabstandet sein und beispielsweise oberhalb von verschiedenen, voneinander beabstandeten Grundstücken liegen. Dies ermöglicht eine Kommunikation mit Zählereinrichtungen, die weiter voneinander beabstandet sind als die Kommunikationsreichweite der einzelnen Flugeinrichtungen, beispielsweise indem ein Netzwerk aus mehreren Flugeinrichtungen aufgebaut wird.

Die Flugeinrichtung kann vor Schritt a) des erfindungsgemäßen Verfahrens in einer bodenseitigen Parkposition stehen und nach Schritt c) des erfindungsgemäßen Verfahrens in der oder einer weiteren bodenseitigen Parkposition abgestellt werden, wobei die Flugeinrichtung an der Zielposition und/oder während der Veränderung der Position der Flugeinrichtung in Schritt b) ohne Bodenkontakt fliegt. Ein Landen der Flugeinrichtung, wenn diese nicht zur Kommunikation mit der Zählereinrichtung benötigt wird, ermöglicht einen besonders energiesparenden Betrieb der Flugeinrichtung. Durch das Aufsteigen der Flugeinrichtung zu der Zielposition wird die Empfangs- bzw. Sendereichweite erheblich vergrößert.

Die Zielposition und die Parkposition können an der gleichen horizontalen Position vertikal übereinander liegen. Dies ermöglicht eine besonders einfache Steuerung der Flugeinrichtung zur Zielposition. Die Flugeinrichtung kann nach einem Verlassen der Parkposition vor und/oder während der Erfassung der Zählerinformation um eine Hochachse der Flugeinrichtung rotiert werden. Die Rotation kann einen Winkel von wenigstens 360°, beispielsweise von 720°, einschließen. Die Rotation kann über einen Zeitraum von wenigstens 5, 10 oder 20 Minuten erfolgen. Auch bei einer Nutzung einer Empfangseinrichtung mit einer gerichteten Richtcharakteristik kann somit mit Zählereinrichtungen in allen Raumrichtungen kommuniziert werden.

Die Flugeinrichtung kann bis zu einem Empfang eines Aktivierungssignals und/oder bis zu einem vorgegebenen Aktivierungszeitpunkt in der Parkposition stehen bleiben, wobei sie bei Empfang des Aktivierungssignals und/oder zu dem Aktivierungszeitpunkt zu der Zielposition bewegt wird, um die Zählerinformation zu Erfassen und/oder die Steuernachricht zu senden und/oder als Netzwerkknoten in einem Netzwerk zur Übermittlung der Zählerinformation und/oder der Steuernachricht zu dienen.

Im erfindungsgemäßen Verfahren können Zählerinformationen mehrerer Zählereinrichtung fernausgelesen werden, denen die gleiche Zielposition zugeordnet ist, wobei nach Erfassung der Zählerinformation eines Teils dieser Zählereinrichtungen die Position der Flugeinrichtung und/oder die Richtcharakteristik in Abhängigkeit einer Positionsinformation verändert wird, die eine Position wenigstens einer Zählereinrichtung beschreibt, deren Zählerinformation noch nicht erfasst wurde. Insbesondere kann eine Bewegung in Richtung dieser Zählereinrichtung oder eine Ausrichtung eines Empfindlichkeitsmaximums der Empfangseinrichtung in Richtung dieser Zählereinrichtung erfolgen.

Die Veränderung der Position der Flugeinrichtung und/oder der Richtcharakteristik kann derart erfolgen, dass die Qualitätsinformation oder wenigstens eine der Qualitätsinformationen oder eine aus der Qualitätsinformation oder aus wenigstens einer der Qualitätsinformationen abgeleitete Größe maximiert oder minimiert wird. Beispielsweise kann ein Verhältnis eines der Zählereinrichtung zugeordneten Nutzanteils des Empfangssignals zu einem wenigstens einer Störquelle zugeordneten Störanteil des Empfangssignals maximiert werden. Somit können durch entsprechende Anpassungen der Position und/oder der Richtcharakteristik Einflüsse von Störquellen gezielt minimiert werden. Die Veränderungen können dabei derart erfolgen, dass Störsignale stärker gedämpft werden als Nutzsignale.

Es kann eine Position wenigstens einer zu dem Störanteil des Empfangssignals beitragenden Störquelle ermittelt werden, wonach die Richtcharakteristik derart verändert wird, dass eine Empfangsempfindlichkeit der Empfangseinrichtung in Richtung der Störquelle reduziert wird und/oder wonach die Position der Flugeinrichtung in Abhängigkeit von das Umfeld der Flugeinrichtung beschreibenden, vorgegebenen Umfelddaten derart verändert wird, dass sich wenigstens ein durch die Umfelddaten beschriebenes Umfeldobjekt zwischen der Störquelle und der Flugeinrichtung befindet. Positionen von Störquellen können vorgegeben sein oder, beispielsweise durch Triangulation, ermittelt werden. Die Umfelddaten können aus vorgegebenen Kartendaten ermittelt werden und/oder durch wenigstens eine Umfelderfassungseinrichtung der Flugeinrichtung bereitgestellt werden.

Im erfindungsgemäßen Verfahren können das Umfeld der Flugeinrichtung beschreibende Umfelddaten vorgegeben werden, wobei die Position der Flugeinrichtung derart verändert wird, dass wenigstens ein durch die Umfelddaten beschriebenes Umfeldobjekt von einer Verbindungslinie zwischen der Empfangseinrichtung und der Zählereinrichtung und/oder von einem Rotationsellipsoid, dessen Brennpunkte die Empfangseinrichtung und die Zählereinrichtung sind, beabstandet ist. Hierbei können die bereits vorangehend erläuterten, durch Kartendaten und/oder eine Umfelderfassungseinrichtung bereitgestellten Umfelddaten genutzt werden. Die Verbindungslinie bzw. der Rotationsellipsoid können insbesondere bezüglich der jeweiligen Antennen der Zählereinrichtung bzw. der Empfangseinrichtung vorgegeben sein. Ein entsprechender Rotationsellipsoid entspricht der ersten Frenselzone der Funkverbindung. Vorzugsweise wird die Position der Flugeinrichtung derart verändert, das wenigstens 55 % der ersten Frenselzone frei von Umfeldobjekten sind.

Die Zielposition und/oder ein Durchführungszeitpunkt der Schritte a) bis c) und/oder das zur Kommunikation mit der Zählereinrichtung genutzte Kommunikationsprotokoll und/oder eine Reihenfolge, in der mehrere Zielpositionen (6, 17), an denen Zählerinformationen erfasst und/oder Steuernachrichten gesendet werden sollen, angeflogen werden, kann in Abhängigkeit einer in einem vorangehenden Durchlauf der Schritte a) bis c) für die zugeordnete Zählereinrichtung ermittelten Qualitätsinformation und/oder in Abhängigkeit einer Position der Flugeinrichtung und/oder einer Richtcharakteristik, für die die Qualitätsbedingung jeweils in einem der vorangehenden Durchläufe der Schritte a) bis c) erfüllt war, vorgegeben werden. Insbesondere können für mehrere Positionen im Umfeld einer Zählereinrichtung oder einer Gruppe von Zählereinrichtungen Erfolgsquoten ermittelt werden, die eine Häufigkeit beschreiben, mit der an einer entsprechenden Position eine Zählerinformation erfolgreich ermittelt wurde. Als Qualitätsinformationen können beispielsweise Empfangsstärken, Kanalauslastungen oder Signal-zu-Stör-Verhältnisse ermittelt werden. Eine Position kann beispielsweise durch eine geographische Länge und Breite, eine Höhe und eine Orientierung eines Azimutwinkels und eines Neigungswinkels der Richtcharakteristik beschrieben werden. In Abhängigkeit der den jeweiligen Positionen zugeordneten Erfolgsquoten bzw. Qualitätsinformationen kann eine Priorisierung dieser Positionen durchgeführt werden. Bei einer Planung einer Route zum Erfassen von Zählerinformationen für die Flugeinrichtung kann die Zielposition derart gewählt werden, dass sie mit der höchstpriorisierten dieser Positionen zusammenfällt. Im Rahmen der Priorisierung kann auch ein Zeitfaktor berücksichtigt werden, so dass beispielsweise tageszeit- oder wochentagsabhängig eine Zielposition bestimmt wird, zu der die Flugeinrichtung bewegt werden soll. Alternativ kann als Zielposition jene Position ausgewählt werden, an der die Qualitätsbedingung für die entsprechende Zählereinrichtung zuletzt erfüllt wurde.

Die Zielposition und/oder das zur Kommunikation mit der Zählereinrichtung genutzte Kommunikationsprotokoll und/oder eine Reihenfolge, in der mehrere Zielpositionen, an denen Zählerinformationen erfasst und/oder Steuernachrichten gesendet werden sollen, angeflogen werden, können in Abhängigkeit von einem Durchführungszeitpunkt der Schritte a) bis c) vorgegeben werden. Insbesondere kann berücksichtigt werden, ob die Schritte tagsüber oder nachts ausgeführt werden und/oder an welchem Wochentag die Schritte durchgeführt werden.

Im Rahmen einer Route zur Erfassung von mehreren Zählereinrichtungen können Zählerinformationen von mehreren einzelnen Zählereinrichtungen mit jeweils zugeordneter Zielposition und/oder von Clustern oder Subclustern von Zählereinrichtungen mit jeweils zugeordneter Zielposition ermittelt werden. Für jede dieser Zählereinrichtungen bzw. für jeden Cluster oder Subcluster kann eine separate Zielposition vorgegeben werden. Dies kann wie vorangehend erläutert, erfolgen.

Die Vorgabe der Zielposition und/oder die Veränderung der Position der Flugeinrichtung und/oder der Richtcharakteristik kann in Abhängigkeit einer Position der Zählereinrichtung und/oder wenigstens einer den Empfang der Zählerinformation störenden Störquelle erfolgen, wobei die Position durch die Flugeinrichtung oder durch mehrere zusammenwirkende Flugeinrichtungen durch Triangulation und/oder durch Bestimmung wenigstens einer Laufzeit eines Sendesignals der Zählereinrichtung und/oder der Störquelle ermittelt wird. Zur Triangulation kann eine Richtung, aus der ein Sendesignal empfangen wird, erfasst werden, indem die Richtcharakteristik der Empfangseinrichtung variiert wird und die jeweiligen Signalstärken ausgewertet werden. Durch eine derartige Messung an mehreren Punkten, die gleichzeitig oder zeitversetzt durch mehrere Flugeinrichtungen oder durch abfliegen dieser Punkte mit einer einzigen Flugeinrichtung erfolgen kann, kann die Position des Senders bestimmt werden. Umfasst das Sendesignal Zeitinformationen oder werden mehrere Flugeinrichtungen mit synchronisierten Uhren genutzt, kann eine Abstandsbestimmung durch eine Laufzeitbestimmung erfolgen. Aus mehreren Abständen oder einem Abstand und einem Raumwinkel kann die Senderposition bestimmt werden.

In Abhängigkeit der Steuernachricht kann durch die Zählereinrichtung ein Öffnungsgrad eines Ventils der Zählereinrichtung verändert und/oder eine interne Uhr der Zählereinrichtung umgestellt und/oder eine einen Zusammenhang zwischen dem Verbrauch und/oder den Verbrauchsdaten und der Zählerinformation beschreibende Berechnungsgröße geändert und/oder ein den Betrieb der Zählereinrichtung steuerndes Steuerprogramm geändert und/oder ein zum Senden der Zählerinformation genutztes Funkprotokoll geändert werden.

Neben dem erfindungsgemäßen Verfahren betrifft die Erfindung eine Flugeinrichtung mit wenigstens einer Bewegungseinrichtung zur Bewegung der Flugeinrichtung, wenigstens einer Empfangseinrichtung und einer Steuereinrichtung zur Steuerung der Bewegungseinrichtung, wobei die Flugeinrichtung zur Durchführung des vorangehend erläuterten Verfahrens ausgebildet ist. Die Steuereinrichtung kann die Bewegungseinrichtung zur Bewegung der Flugeinrichtung zu der Zielposition ansteuern. Anschließend kann die Steuereinrichtung Empfangssignale über die Empfangseinrichtung empfangen und auswerten, um die Qualitätsinformation zu bestimmen. Solange diese eine durch die Steuereinrichtung ausgewertete Qualitätsbedingung nicht erfüllt, kann die Steuereinrichtung die Bewegungseinrichtung ansteuern, um eine Position der Flugeinrichtung durch eine Bewegung der Flugeinrichtung und/oder eine Richtcharakteristik der Empfangseinrichtung durch ein Rotieren oder Verkippen der Flugeinrichtung zu ändern, und/oder die Empfangseinrichtung ansteuern, um die Richtcharakteristik durch Anpassung von Phasen und/oder Amplituden von gemischten Antennensignalen anzupassen. Ergänzend oder alternativ kann das Kommunikationsprotokoll gewechselt werden.

Vorzugsweise kann die Flugeinrichtung ein Quatrocopter sein. Diese ermöglichen eine besonders flexible Anpassung der Position und Orientierung der Flugeinrichtung.

Die Flugeinrichtung kann eine Kommunikationseinrichtung aufweisen, durch die von einer ersten weiteren Flugeinrichtung an die Flugeinrichtung übermittelte Daten an eine zweite weitere Flugeinrichtung und/oder eine Zentraleinrichtung weiterleitbar sind und/oder umgekehrt. Die Nutzung einer derartigen Kommunikationseinrichtung ermöglicht es, durch mehrere der Flugeinrichtungen ein Netzwerk zur, insbesondere bidirektionalen, Kommunikation über mehrere Flugeinrichtungen aufzubauen. Es ist hierbei möglich, dass die Flugeinrichtungen an definierten Positionen in der Nähe einer Sollposition, an der sie zum Netzwerkaufbau dienen sollen, landen. Zu definierten Zeitpunkten und/oder bei Empfang eines Aktivierungssignals können die Flugeinrichtungen starten und sich zeitnah an die Sollposition begeben, an der ein Netzwerkaufbau ermöglicht wird.

Die Flugeinrichtung kann eine Trageeinrichtung aufweisen, durch die zuzustellende Sendungen an der Flugeinrichtung halterbar und automatisch ablegbar sind. Dies ermöglicht es, die Flugeinrichtung während der Erfassung von Zählerinformationen oder separat hiervon zu einer Zustellung von Sendungen zu nutzen. Beispielsweise kann die Flugeinrichtung Pakete für einen Paketdienst ausliefern.

Die Flugeinrichtung kann dazu eingerichtet sein, über zumindest zwei wählbare, unterschiedliche Kommunikationsprotokolle mit der Zählereinrichtung zu kommunizieren, die sich bezüglich der bei gleicher Sendeleistung erreichbaren Reichweiten und/oder Datenraten und/oder bezüglich der Störfestigkeit gegenüber Störquellen unterscheiden. Beispielsweise kann zur Erfassung der Zählerinformation ein Kommunikationsprotokoll mit hoher Reichweite und relativ geringer Datenrate genutzt werden. Soll ein Firmware-Update für die Zählereinrichtungen eingespielt werden, ist ein Datentransfer mit einer höheren Transferrate vorteilhaft. Daher kann in diesem Fall ein Kommunikationsprotokoll mit einer höheren erreichbaren Datenrate nutzbar sein. Es kann hierbei notwendig sein, die Flugeinrichtung näher an die Zählereinrichtung heranzubewegen, um eine zuverlässige Kommunikation zu erreichen. In diesen Fällen kann es vorteilhaft sein, dass vorangehend erläuterte Netzwerke aus mehreren der Flugeinrichtungen zu nutzen, um eine schnelle und zuverlässige bidirektionale Kommunikation zu erreichen.

Die Erfindung betrifft zudem ein Erfassungssystem zum Erfassen eines Verbrauchs, das mehrere verstreut angeordnete Zählereinrichtungen, durch die jeweils ein Verbrauch erfassbar ist und/oder erfasste Verbrauchsdaten sammelbar sind, und wenigstens eine erfindungsgemäße Flugeinrichtung, durch die Zählerinformationen der Zählereinrichtungen erfassbar sind, umfasst.

Weitere Vorteile und Einzelheiten der Erfindung zeigen die folgenden Ausführungsbeispiele sowie die zugehörigen Zeichnungen. Dabei zeigen schematisch:
- Fig. 1 und Fig. 2: Ausführungsbeispiele des erfindungsgemäßen Verfahrens,
- Fig. 3: ein Ausführungsbeispiel einer erfindungsgemäßen Flugeinrichtung,
- Fig. 4: eine Detailansicht der Komponenten der Empfangseinrichtung der in Fig. 3 gezeigten Flugeinrichtung, und
- Fig. 5: ein weiteres Ausführungsbeispiel des erfindungsgemäßen Verfahrens.

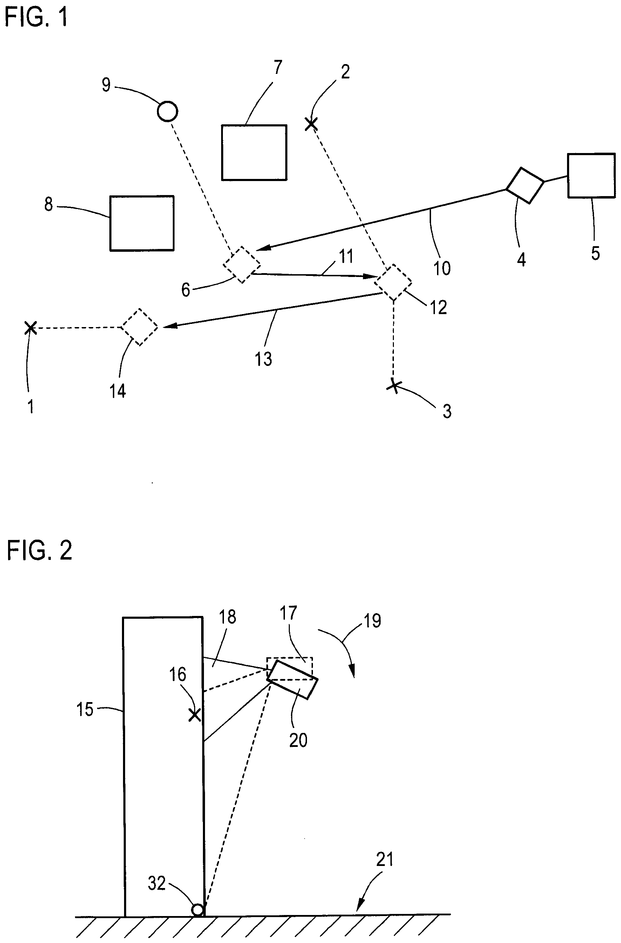

Fig. 1 zeigt ein Ausführungsbeispiel eines Verfahrens zur Erfassung einer durch die jeweiligen Zählereinrichtungen 1, 2, 3 gesendeten Zählerinformation durch eine Flugeinrichtung 4. Durch die Zählereinrichtungen 1, 2, 3 werden jeweils Verbrauchsdaten eines nicht gezeigten Versorgungsnetzwerkes, beispielsweise einer Gas-, Wasser- oder Energieversorgung, erfasst. In alternativen Ausführungsbeispielen wäre es möglich, dass eine oder mehrere der Zählereinrichtung 1, 2, 3 nicht selbst einen Verbrauch misst, sondern Verbrauchsdaten von mehreren Messeinrichtungen als Aggregator sammelt.

Die Zählereinrichtungen 1, 2, 3 sollen ausgelesen werden und die ausgelesenen Zählerinformationen an eine Zentraleinrichtung 5 bereitgestellt werden, in der sie beispielsweise zur Steuerung des Netzwerkes und/oder zur Rechnungslegung ausgewertet werden können. Hierzu wird durch eine Recheneinrichtung, die in der Zentraleinrichtung 5 angeordnet sein kann, jedoch auch ein Teil der Flugeinrichtung 4 sein kann, eine Ausleseroute geplant, entlang der Zählerinformationen der Zählereinrichtungen 1, 2, 3 erfasst werden sollen, indem die Flugeinrichtung 4 zu einer oder mehreren Zielpositionen 6 bewegt wird, um an der Zielposition 6 oder im Umfeld der Zielposition 6 Zählerinformationen von den Zählereinrichtungen 1, 2, 3, die der Zielposition 6 zugeordnet sind, zu erfassen. In Fig. 1 ist aus Übersichtlichkeitsgründen nur eine Zielposition 6 dargestellt. Reale Auswerterouten werden häufig mehrere Zielpositionen 6 mit jeweils zugeordneten Zählereinrichtungen 1, 2, 3 aufweisen, die nacheinander durch die Flugeinrichtung 4 angeflogen werden. Das Verhalten der Flugeinrichtung 4 an den weiteren Zielpositionen entspricht dem Verhalten an der Zielposition 6.

In den zu Fig. 1 und Fig. 2 erläuterten Ausführungsbeispielen wird primär der Empfang von Zählerinformationen erläutert. Ergänzend oder alternativ wäre es jedoch möglich, die oder eine weitere Zielposition anzufliegen, um eine Steuernachricht zum Steuern des Betriebs wenigstens einer der Zählereinrichtungen 1, 2, 3 an die entsprechende Zählereinrichtung zu versenden. Eine entsprechende Steuernachricht kann vorangehend von der Zentraleinrichtung 5 empfangen werden.

Die Ausleseroute kann in Abhängigkeit von Netzinformationen geplant werden, die ein Versorgungsnetz, dem die Zählereinrichtungen 1, 2, 3 zugeordnet sind, beschreiben. Diese Netzinformationen können vorzugsweise die räumlichen Positionen und/oder weitere Daten, beispielsweise eine Sendeleistung, der Zählereinrichtungen 1, 2, 3 beschreiben. Die Zielposition 6 wird in dem in Fig. 1 gezeigten Fall derart ermitteln, dass sie im Wesentlichen mittig zwischen den Zählereinrichtungen 1, 2, 3 liegt, die einem gemeinsamen Messcluster zugeordnet sind. In alternativen Ausführungsbeispielen könnten im Rahmen der Routenplanung und somit im Rahmen der Festlegung der Zielposition 6 bereits Informationen über die Umfeldobjekte 7, 8, die Hochhäuser sind, oder über Störquellen 9, deren Position bereits bekannt ist, berücksichtigt werden. Ergänzend oder alternativ kann die Routenplanung, insbesondere die Auswahl der Zielposition 6 und/oder eine Reihenfolge, in der mehrere Zielpositionen 6 angeflogen werden, in Abhängigkeit der Zeit des Routenbeginns, beispielsweise in Abhängigkeit eines Tag-Nacht-Zykluses, erfolgen. Beispielsweise kann berücksichtigt werden, dass bestimmte Störquellen 9 nur zu bestimmten Tageszeiten aktiv sind.

Für die Zielpositionen 6 wird jeweils eine geographische Länge und Breite, eine Flughöhe, ein Azimutwinkel, das heißt eine Rotation der Flugeinrichtung 4 bezüglich ihrer Hochachse, und ein Neigungswinkel, das heißt eine relative Verkippung der Flugeinrichtung 4 bezüglich des Bodens, vorgegeben. Ergänzend kann vorgegeben werden, welches von mehreren nutzbaren Kommunikationsprotokollen zur Kommunikation mit den Zählereinrichtungen 1, 2, 3 an der jeweiligen Zielposition 6 genutzt wird. Nach dem Festlegen der Ausleseroute wird diese zu einem vorgegebenen Zeitpunkt gestartet. Zu diesem Zeitpunkt wird die Flugeinrichtung 4 zunächst entlang des Pfeils 10 zu der Zielposition 6 bewegt. Nach dem Erreichen der Zielposition 6 werden durch eine Empfangseinrichtung der Flugeinrichtung 4 auf einem den Zählereinrichtungen 1, 2, 3 zugeordneten Funkkanal Empfangssignale empfangen. In Abhängigkeit dieser Empfangssignale werden als Qualitätsinformationen, die eine Kommunikationsqualität auf dem Funkkanal beschreiben, einerseits eine Fehlerrate für von den Zählereinrichtungen 1, 2, 3, empfangene Datenpakete und andererseits eine Kanallast ermittelt.

Die Zählereinrichtungen 1, 2, 3 senden die Zählerinformationen periodisch mit vorgegebenem Zeitabstand. In einer alternativen Ausführungsform wäre es auch möglich, dass die Zählereinrichtungen 1, 2, 3 Signale erst nach einem Empfang einer Aufforderungsnachricht, die durch die Flugeinrichtung 4 gesendet wurde, senden.

Eine Kanallast wird ermittelt, indem ausgewertet wird, für welchen Zeitanteil eines Messintervalls ein mittlerer Summenleistungspegel aller über die Empfangseinrichtung empfangener Empfangssignale auf dem Funkkanal bzw. den Funkkanälen, der bzw. die den Zählereinrichtungen 1, 2, 3 zugeordnet ist bzw. sind, oberhalb eines vorgegebenen Referenzwertes liegt, so dass in diesem Zeitanteil keine Kommunikation mit den Zählereinrichtungen 1, 2, 3 möglich ist. Zur Ermittlung des Referenzwertes wird zunächst ein jeweiliger, den Zählereinrichtungen 1, 2, 3 zugeordneter Prognosewert für die Zählerleistungspegel der von den jeweiligen Zählern empfangenen Signale ermittelt. Hierzu kann eine momentane Eigenposition der Flugeinrichtung 4, beispielsweise durch Nutzung eines GPS-Sensors, ermittelt werden. Die Positionen der einzelnen Zählereinrichtungen 1, 2, 3 in Weltkoordinaten sind bekannt. Sie können beispielsweise, wie vorangehend erläutert, aus den Netzinformationen bestimmt werden oder durch eine vorangehende Triangulation ermittelt worden sein. Aus der Eigenposition und den Weltkoordinaten der Zählereinrichtungen 1, 2, 3 können die Abstände zwischen der Flugeinrichtung 4 und den Zählereinrichtungen 1, 2, 3 ermittelt werden. Aus diesen lässt sich, insbesondere unter Berücksichtigung von Umfelddaten, die potentiell abschwächende Objekte beschreiben, und/oder der Richtcharakteristik der Empfangseinrichtung, ein zu erwartender Zählerleistungspegel für die von den einzelnen Zählereinrichtungen empfangenen Empfangssignale berechnen. Der niedrigste dieser Zählerleistungspegel wird als Basis für den Referenzwert genutzt, um sicher zu stellen, dass die Störung kleiner ist als das schwächste zu messende Zählersignal. Zu diesem Zählerleistungspegel kann ein Offset addiert werden, der auch negativ sein kann, um den Referenzwert zu bestimmen, beispielsweise um Eigenschaften des genutzten Kommunikationsprotokolls oder der Empfangseinrichtung zu berücksichtigen.

Als weitere Qualitätsinformation wird für jede der Zählereinrichtungen 1, 2, 3 eine Fehlerrate für die von der jeweiligen Zählereinrichtung empfangenen Datenpakete bestimmt. Als Fehlerrate kann beispielsweise ein Verhältnis von gesendeten zu korrekt empfangenen Paketen bestimmt werden. Dies ist besonders einfach möglich, wenn die einzelnen Datenpakete Seriennummern aufweisen. In diesem Fall können fehlende Pakete leicht erkannt werden. Fehlerhafte Pakete können beispielsweise durch eine Auswertung von Prüfsummen erkannt werden. Eine entsprechende Fehlerrate kann auch dann einfach berechnet werden, wenn für die einzelnen Zählereinrichtungen jeweils bekannt ist, mit welcher Frequenz sie im zeitlichen Mittel senden, da die Anzahl der empfangenen Pakete mit der mittleren für das entsprechende Intervall erwarteten Paketzahl verglichen werden kann. d

Der Empfang von Empfangssignalen und die Ermittlung der Qualitätsinformationen erfolgt wiederholt. Währenddessen kann, um die Empfangssituation zu verbessern, solange eine die Qualitätsinformationen auswertende Qualitätsbedingung nicht erfüllt ist, die Flugeinrichtung 4 bewegt werden, um eine Position der Flugeinrichtung 4 anzupassen und/oder eine Richtcharakteristik der Empfangseinrichtung kann angepasst werden. Alternativ oder ergänzend kann ein zur Kommunikation mit der Zählereinrichtung genutztes Kommunikationsprotokoll angepasst werden. Die Qualitätsbedingung umfasst zwei Teilbedingungen, die beide erfüllt sein müssen, um die Qualitätsbedingung zu erfüllen. Diese vergleichen die Kanallast und die Fehlerrate mit einem jeweiligen vorgegebenen Grenzwert und sind nur dann erfüllt, wenn der jeweilige Grenzwert unterschritten ist. Im gezeigten Beispiel wird als Empfangseinrichtung der Flugeinrichtung 4 eine omnidirektionale Antenne genutzt, so dass eine Anpassung der Richtcharakteristik nicht möglich ist. Diese Einschränkung erfolgt aus Übersichtlichkeitsgründen. Ein Beispiel zur Anpassung der Richtcharakteristik wird später noch mit Bezug auf Fig. 2 erläutert. Selbstverständlich können beide Ansätze kombiniert werden, so dass eine kombinierte Anpassung der Position der Flugeinrichtung 4 und der Richtcharakteristik erfolgen kann, um die Empfangssituation zu verbessern.

Problematisch für den Empfang der Zählerinformationen an der Zielposition 6 ist, dass diese eine ungestörte Empfangslinie zur Störquelle 9 aufweist. Bei der Störquelle 9 kann es sich um eine andere Kommunikationseinrichtung handeln, die auf dem gleichen Funkkanal wie die Zählereinrichtungen 1, 2, 3 funkt. Es ist jedoch auch möglich, dass eine Störung durch andere Einrichtungen, beispielsweise breitbandig störende elektrische Maschinen, erfolgt. Aufgrund des Empfangs der Funksignale der Störquelle 9 ist die erfasste Kanallast sehr hoch und überschreitet den entsprechenden Grenzwert.

Daher sind die erste Teilbedingung und daher auch die Qualitätsbedingung nicht erfüllt, womit eine Änderung der Empfangsposition der Flugeinrichtung 4 erfolgen soll. Zur Ermittlung, wie eine entsprechende Veränderung erfolgen soll, kann eine die Position der Störquelle 9 beschreibende Störerinformation und eine die Umfeldobjekte 7, 8 beschreibende Umfeldinformation ausgewertet werden. Die Umfeldinformation und die Störerinformation können auf einem Datenspeicher der Flugeinrichtung 4 gespeichert sein, von der Zentraleinrichtung 5 übermittelt werden oder durch die Flugeinrichtung 4 erfasst werden.

Um die Position der Störquelle 9 zu ermitteln, kann ein durch die Störquelle 9 gesendetes Signal an mehreren verschiedenen Positionen der Flugeinerichtung 4 bzw., falls eine Richtcharakteristik veränderbar ist, mit mehreren verschiedenen Richtcharakteristiken erfasst werden, um auf Basis einer Triangulation die Position der Störquelle 9 zu ermitteln. Eine Triangulation kann erfolgen, indem an mehreren Positionen erfasst wird, aus welcher Richtung das Störsignal empfangen wird. Dies ist durch eine Anpassung der Empfangscharakteristik möglich. Ergänzend oder alternativ können an mehreren Positionen Abstände ermittelt werden, indem Laufzeiten oder/oder Signalabschwächungen ausgewertet werden. Umfelddaten können, soweit sie nicht aus bereitgestellten Kartendaten entnehmbar sind, durch eine Umfelderfassungseinrichtung, beispielsweise eine Kamera, erfasst werden. Durch Auswertung der Umfeldinformationen und der Störerinformation wird ermittelt, dass eine Veränderung der Position derart erfolgen soll, dass die Flugeinrichtung 4 in Richtung des Pfeiles 11 bewegt wird.

Beim Erreichen der Position 12 ist die Sichtlinie zur Störquelle 9 durch das Umfeldobjekt 7 blockiert, womit die Kanallast unter den entsprechenden Grenzwert sinkt. Die entsprechende Teilbedingung der Qualitätsbedingung ist somit erfüllt.

Als verbleibende Teilbedingung wird ausgewertet, ob die Fehlerrate niedrig genug ist, um eine Erfassung der jeweils zugeordneten Zählerinformation zu ermöglichen. Bei ausreichend hoher Sendeleistung der Zählereinrichtungen 1, 2, 3 wäre dies aufgrund der ausreichend hohen Signalstärke an der Position 12 der Fall und die drei zugeordneten Zählerinformationen könnten erfasst werden. Im gezeigten Beispiel ist die Sendeleistung der Zählereinrichtung 1 jedoch relativ gering, so dass aufgrund des Abstands der Zählereinrichtung 1 zur Position 12 die Empfangsstärke des der Zählereinrichtung 1 zugeordneten Signals nicht ausreicht, um eine ausreichend niedrige Fehlerrate zu erreichen. Die Qualitätsbedingung ist somit nur für die Zählereinrichtungen 2, 3 erfüllt, so dass zunächst nur die Zählerinformationen dieser Zählereinrichtungen 2, 3 erfasst werden. In Fällen, in denen Steuernachrichten an die Zählereinrichtungen 1, 2, 3 übertragen werden sollen, können nun die Steuernachrichten an die Zählereinrichtungen 2 und 3 übertragen werden.

Nach dem Erfassen der Zählerinformationen der Zählereinrichtungen 2, 3 können die Zählerinformationen, beispielsweise über W-LAN oder gemäß eines Mobilfunkstandards, an die Zentraleinrichtung 5 übertragen werden. Alternativ wäre es möglich, die Zählerinformationen zunächst zu speichern und zu einem späteren Zeitpunkt an die Zentraleinrichtung 5 zu übermitteln.

Nachdem ein Teil der Zählerinformationen, nämlich die Zählerinformationen der Zählereinrichtungen 2, 3, erfasst wurden, steuert die Steuereinrichtung der Flugeinrichtung 4 eine Bewegungseinrichtung der Flugeinrichtung 4 an, um die Position der Flugeinrichtung 4 in Abhängigkeit einer Positionsinformation anzupassen, die die Position der verbleibenden, noch nicht ausgelesenen Zählereinrichtung 1 beschreibt. Im gezeigten Fall wird die Flugeinrichtung 4 hierzu entlang des Pfeils 13 in Richtung der Zählereinrichtung 1 bewegt. Es wäre jedoch möglich, einen anderen Pfad festzulegen, wobei die Umfeldobjekte 7, 8 und/oder bekannte Positionen von Störquellen 9 berücksichtigt werden können. Bei Erreichen der Position 14 ist die Empfangsstärke des der Zählereinrichtung 1 zugeordneten Signalanteils der Empfangssignale ausreichend hoch, sodass die Fehlerrate den zugeordneten Grenzwert unterschreitet, wobei weiterhin die Kanallast ausreichend niedrig ist, womit die Qualitätsbedingung auch für die Zählereinrichtung 1 erfüllt ist. Somit wird die Zählerinformation der Zählereinrichtung 1 durch Auswertung der Empfangssignale erfasst. Auch diese Zählerinformation wird, wie vorangehend beschrieben, zur Zentraleinrichtung 5 übermittelt. Alternativ oder ergänzend kann eine Steuernachricht an die Zählereinrichtung 1 übermittelt werden. Anschließend kann die Flugeinrichtung 4 zur Zentraleinrichtung 5 oder einem anderen Landeplatz zurückkehren, für andere Aufgaben, beispielsweise für einen Pakettransport genutzt werden und/oder weitere Zielpositionen anfliegen, um dort Zählerinformationen weiterer Zählereinrichtungen zu erfassen.

Bestimmte Funksysteme und -protokolle weisen eine sehr geringe Anfälligkeit gegenüber Störern auf. Insbesondere in diesem Fall ist es zweckmäßig, wenn eine niedrige Fehlerrate der empfangenen Datenpakete als einziges Qualitätskriterium oder als ein Teilkriterium, dessen Erfüllung hinreichend für die Erfüllung der Qualitätsbedingung ist, genutzt wird. Die Qualitätsbedingung kann bei niedrigen Fehlerraten somit unabhängig von anderen Qualitätsinformationen erfüllt sein.

Das beschriebene Vorgehen ermöglicht einen robusten Empfang der Zählerinformationen der Zählereinrichtungen 1, 2, 3. Das anfängliche Anfliegen der Zielposition 6 verlängert die Datenerfassung jedoch unnötig. Es ist daher vorteilhaft, wenn bei Wiederholungen der vorangehend beschriebenen Auslesung zu späteren Zeitpunkten Informationen, die bei vorangehenden Auslesungen erfasst wurden, berücksichtigt werden. Daher werden zusätzlich die Qualitätsinformationen an die Zentraleinrichtung 5 übertragen, die an der Zielposition 6, den Positionen 12, 14 und an dazwischen liegende Positionen entlang der Pfeile 11, 13 erfasst wurden. Zusätzlich werden die Positionen 12, 14 gespeichert, an denen die Zählerinformationen erfolgreich erfasst wurden. Entsprechende Qualitätsinformationen und Positionen werden über mehrere Auslesevorgänge hinweg gespeichert und statistisch ausgewertet, um eine optimale neue Zielposition für folgende Erfassungsrouten zu bestimmen.

Beispielsweise könnte als optimale Zielposition die Position 12 ermittelt werden. Es ist auch möglich, dass aufgrund der statistischen Auswertung die Zuordnung der Zählereinrichtungen 1, 2, 3 zu einer gemeinsamen Zielposition aufgehoben wird und separate Zielpositionen für die einzelnen Zählereinrichtungen 1, 2, 3 oder Teile der Zählereinrichtungen 1, 2, 3 vorgegeben werden. Die Bestimmung der Zielposition bzw. der Zielpositionen ist ein Optimierungsproblem. Zur Lösung derartiger Optimierungsprobleme sind eine Vielzahl von Ansätzen bekannt, weshalb diese nicht näher erläutert werden sollen.

Die erläuterte statistische Auswertung kann auch zeitabhängig erfolgen, so dass beispielsweise zwischen verschiedenen Tageszeiten oder Wochentagen unterschieden wird. Ist die Störquelle 9 beispielsweise nur zu bestimmten Zeiten aktiv, können etwa für Zeiten, in denen die Störquelle 9 aktiv ist, und für Zeiten, in denen die Störquelle 9 nicht aktiv ist, unterschiedliche Zielpositionen 6 vorgegeben werden. Zudem können in Abhängigkeit der statistischen Auswertung der Zeitpunkt variiert werden, zu dem die Ausleseroute gestartet wird, und/oder die Reihenfolge verändert werden, in der verschiedene Zielpositionen 6 auf der Route angeflogen werden.

Fig. 2 zeigt ein weiteres Ausführungsbeispiel zur Erfassung einer Zählerinformation. Hierbei ist in einem Gebäude 15 sowohl eine auszulesende Zählereinrichtung 16 als auch eine Störquelle 32 angeordnet. Die genutzte Flugeinrichtung 20 umfasst als Empfangseinrichtung eine Antenne mit einer bezüglich der Flugeinrichtung 20 festen Richtcharakteristik 18. Zur Erfassung der Zählerinformation wird die Flugeinrichtung 20 zunächst in die Zielposition 17 bewegt, in der sie gegenüber dem Boden 21 nicht geneigt ist. In der Zielposition 17 liegen sowohl die Zählereinrichtung 16 als auch die Störquelle 32, in der durch die Richtcharakteristik 18 vorgegebene Empfangskeule, so dass die Störquelle 32 den Empfang der Zählerinformation stört und somit, wie vorangehend zur Fig. 1 erläutert, die Qualitätsbedingung nicht erfüllt ist.

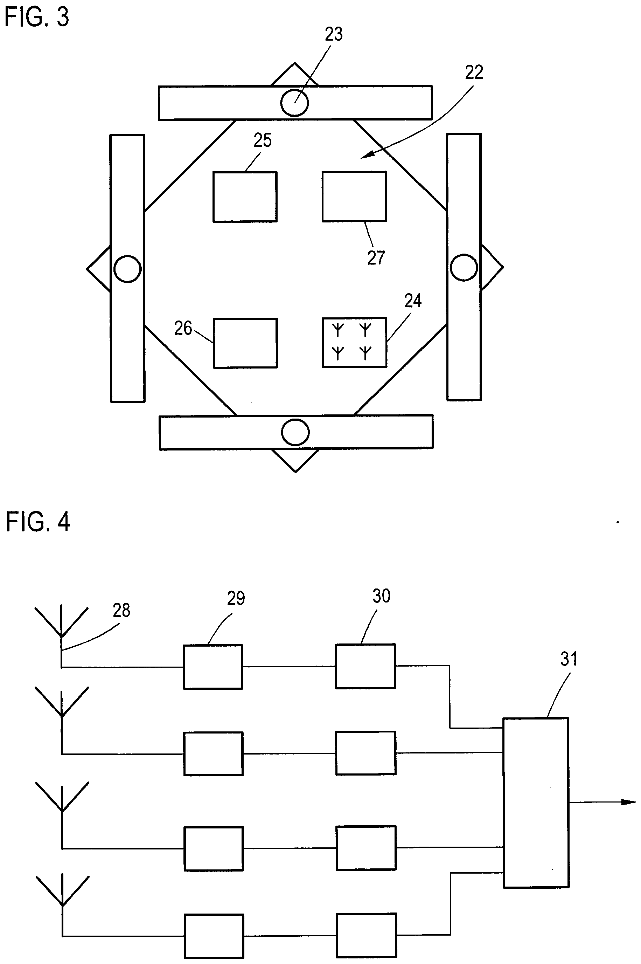

Es wäre in diesem Fall möglich, wie zu Fig. 1 erläutert, die Position der Flugeinrichtung 20 anzupassen. Vorliegend erfolgt stattdessen jedoch eine Anpassung der Richtcharakteristik 18, indem ein Neigungswinkel der Flugeinrichtung 20 bezüglich des Bodens 21, wie durch Pfeil 19 dargestellt, verändert wird. Eine entsprechende Neigung der Flugeinrichtung 20 ist insbesondere in dem Fall, dass als Flugeinrichtung 20 ein Quadrocopter genutzt wird, auch ohne eine Positionsveränderung möglich, so dass ein vorgegebener Neigungswinkel über längere Zeit gehalten werden kann. Eine alternative Möglichkeit zur Anpassung der Richtcharakteristik wäre eine Nutzung mehrerer Antennen, deren Signale im Rahmen eines Beamformings addiert werden. Eine derartige Möglichkeit wird noch mit Bezug auf Fig. 4 erläutert werden. Die Möglichkeit neben einer Position auch eine Richtcharakteristik anzupassen, ermöglicht einerseits eine schnellere und einfachere Verbesserung der Empfangsqualität und andererseits auch ein Empfang von Zählerinformationen, wenn dies aufgrund einer komplexen Störersituation bzw. Struktur des Umfelds ansonsten unter Umständen nicht möglich wäre.

Fig. 3 zeigt ein Ausführungsbeispiel einer Flugeinrichtung 22, die zur Durchführung der mit Bezug auf Fig. 1 und 2 erläuterten Verfahren ausgebildet ist. Die Flugeinrichtung 22 ist als Quadrocopter ausgebildet und weist vier Bewegungseinrichtungen 23, nämlich Propeller, auf, die zum einen ein fliegen der Flugeinrichtung 22 und zum anderen die Bewegung der Flugeinrichtung 22 ermöglichen. Daneben weist die Flugeinrichtung 22 eine Empfangseinrichtung 24 auf, die später noch detailliert mit Bezug auf Fig. 4 erläutert wird. Eine Steuereinrichtung 25 steuert die Bewegungseinrichtungen 23, um die Flugeinrichtung 22 zu der Zielposition zu bewegen, eine Position und/oder eine Neigung bzw. Orientierung der Flugeinrichtung 22 anzupassen und/oder die Flugeinrichtung 22 für andere Zwecke zu bewegen. Die Steuereinrichtung 25 dient zudem der Erfassung der Zählerinformationen, indem sie über die Empfangseinrichtung 24 empfangene Empfangssignale auswertet, wenn die vorangehend erläuterte Qualitätsbedingung erfüllt ist. Nach dem Erfassen von Zählerinformationen können diese durch die Steuereinrichtung 25 über eine Kommunikationseinrichtung 26 der Flugeinrichtung 22 an eine Zentraleinrichtung übertragen werden. Dies kann sofort oder nach einem Zwischenspeichern in der Steuereinrichtung 25 erfolgen.

Die Kommunikationseinrichtung 26 kann zudem genutzt werden, um ein Netzwerk aus mehreren der Flugeinrichtungen 22 aufzubauen, indem von einer ersten weiteren Flugeinrichtung an die Flugeinrichtung 22 übermittelte Daten an eine zweite weitere Flugeinrichtung und/oder eine Zentraleinrichtung weitergeleitet werden und/oder umgekehrt. Die Kommunikationseinrichtung 26 kann zudem die Antennen der Empfangseinrichtung 24 nutzen, um Steuernachrichten an die Zählereinrichtung zu übertragen und/oder um eine bidirektionale Kommunikation mit Zählereinrichtungen durchzuführen. Hierzu können verschiedene Kommunikationsprotokolle genutzt werden, die sich bezüglich der erreichbaren Reichweite und/oder Datenrate bei gleicher Sendeleistung unterscheiden. Beispielsweise kann durch die Flugeinrichtung 22 ein Firmware-Update für eine Zählereinrichtung bereitgestellt werden, wozu ein Kommunikationsprotokoll mit hoher Datenrate genutzt wird.

Das Auslesen von Zählereinrichtungen ist häufig eine nicht zeitkritische Aufgabe, so dass parallel zur Auslesung der Zählereinrichtungen oder zu Zeitpunkten, zu denen keine Zählerauslesung erfolgt, durch die Flugeinrichtung 22 andere Aufgaben übernommen werden können. Hierzu weist die Flugeinrichtung 22 eine Trageeinrichtung 27 auf, durch die zuzustellende Sendungen an der Flugeinrichtung 22 halterbar und automatisch ablegbar sind. Beispielsweise können durch die Flugeinrichtung 22 somit im Rahmen der Zählerablesung oder zu anderen Zeitpunkten Pakte für Zustelldienste zugestellt werden.

Wie zu Fig.2 erläutert kann eine Richtcharakteristik der Empfangseinrichtung 24 dadurch angepasst werden, dass die gesamte Flugeinrichtung 22 rotiert oder gekippt wird. Um die Richtcharakteristik flexibler anpassbar zu gestalten, kann jedoch auch ein sogenanntes Beamforming genutzt werden. Dies wird im Folgenden mit Bezug auf Fig. 4 erläutert, die eine Detailansicht der Komponenten der Empfangseinrichtung 24 zeigt. Die Empfangseinrichtung 24 weist vier Antennen 28 auf. Die Anzahl der Antennen kann auch deutlich höher sein, wobei die dargestellte Anzahl aus Übersichtlichkeitsgründen auf vier beschränkt ist. Jeder dieser Antennen 28 ist ein identischer Verarbeitungsstrang zugeordnet, in dem zunächst durch einen Umsetzer 29 eine Analog-Digital-Umsetzung erfolgt. Die Analog-Digital-Umsetzung kann direkt für das Antennensignal oder nach einer Frequenzumsetzung erfolgen. Die gewandelten Signale werden einen Phasenschieber 30 zugeführt, der die empfangenen Signale um einen unabhängig für die einzelnen Antennen 28 vorgebbaren Phasenversatz verschieben kann. Als Phasenschieber 30 kann auch ein sogenannter Finite-Impuls-Response-Filter genutzt werden, dessen Ausgangssignal einer Addition von um einen unterschiedlichen Phasenversatz verschobenen Eingangssignalen mit jeweils zuordenbarer Amplitude entspricht. Die Ausgangssignale der Phasenschieber 30 werden einer digitalen Additionsstufe 31 zugeführt, wodurch die Signale mit jeweils vorgebbaren Amplituden gewichtet addiert werden. Durch eine phasenverschobene und amplitudengewichtete Addition der Antennensignale mehrerer Antennen 28 kann eine Richtcharakteristik dynamisch angepasst werden. Dieses Vorgehen ist im Stand der Technik grundsätzlich bekannt und soll daher nicht detailliert erläutert werden.

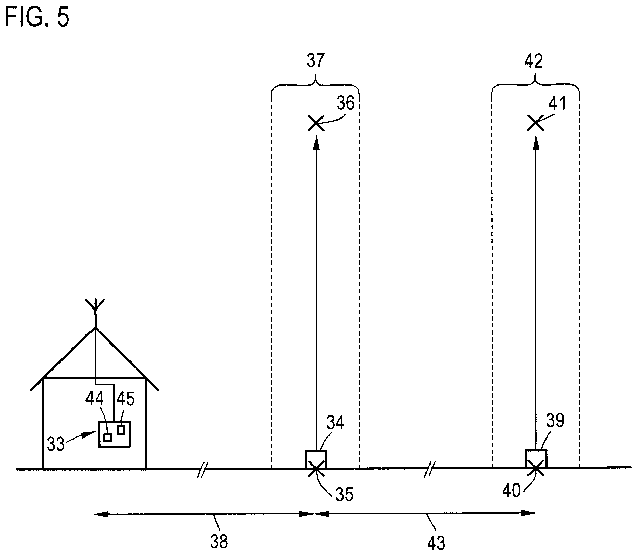

Fig. 5 zeigt ein weiteres Ausführungsbeispiel eines Verfahrens zur Kommunikation zwischen nicht gezeigten Zählereinrichtungen und Flugeinrichtungen 34, 39. In dem in Fig. 5 gezeigten Beispiel soll eine bidirektionale Kommunikation zwischen einer Zentraleinrichtung 33 und mehreren von dieser entfernten Zählereinrichtungen ermöglicht werden, um eine Fernwartung der Zählereinrichtungen durch einen Nutzer zu ermöglichen. Dies wird im Folgenden am Beispiel eines Firmwareupdates, also einer Änderung eines den Betrieb der jeweiligen Zählereinrichtung steuernden Programms, erläutert. Das geschilderte Vorgehen kann jedoch auch genutzt werden um beispielsweise Zählerinformationen auszulesen und/oder Ventile der Zählereinrichtungen zu steuern.

Das Firmwareupdate wird durch eine Benutzereingabe an einer Eingabeeinrichtung 44 der Zentraleinrichtung 33, beispielsweise durch eine Auswahl eines entsprechenden Menüpunktes einer Benutzeroberfläche, gestartet. Um eine Kommunikation mit der Zählereinrichtung zu ermöglichen, sollen die Flugeinrichtungen 34, 39 zunächst von einer jeweiligen Parkposition 35, 40 in eine jeweilige Zielposition 36, 41 gebracht werden. Nach Erreichen der Zielpositionen 36, 41 kann die Zentraleinrichtung 33 mit relativ hoher Datenrate mit der Flugeinrichtug 34 kommunizieren, die als Router dient und die Signale bzw. die Datenpakete an die Flugeinrichtung 39 übermittelt. Dies ist bei einer Höhe der Zielpositionen von z.B. 50 m, 100 m oder 150 m über durch die Pfeile 38, 43 angedeutete Entfernungen von z.B 10 km möglich. Im gezeigten Fall kann beispielsweise ein Signal von der Zentraleinrichtung 33 über die Flugeinrichtungen 34, 39 an eine Zählereinrichtung innerhalb eines 10 km Radiuses um die Parkposition 40 übertragen werden und umgekehrt.

Nach dem Auslösen des Firmwareupdates wird zunächst ein Aktivierungssignal von der Zentraleinrichtung an die Flugeinrichtung 34 gesendet. Nach Empfang des Aktivierungssignals bewegt sich die Flugeinrichtung 34 zu der Zielposition 36 und sendet ein Aktivierungssignal an die Flugeinrichtung 39. Die Flugeinrichtung 39 bewegt sich bei Empfang des Aktivierungssignals zu der Zielposition 41. Um eine optimale Kommunikation mit der Zählereinrichtung zu ermöglichen werden an der Zielposition 41, wie mit Bezug auf Fig. 1 und Fig. 2 erläutert, Empfangssignale empfangen, Qualitätsinformationen bestimmt und die Position und/oder Ausrichtung und/oder das Kommunikationsprotokoll geändert, bis die Qualitätsbedingung erfüllt ist und somit ein zuverlässiger Kommunikationspfad zu der Zählereinrichtung aufgebaut ist. Nach der Erfüllung der Qualitätsbedingung wird mit der Übertragung des Firmwareupdates begonnen. Nach Abschluss des Updates wird, um zu überprüfen, ob das Update erfolgreich war, eine Statusnachricht über die Flugeinrichtungen 34, 39 an die Zentraleinrichtung gesendet und dort auf einer Ausgabeeinrichtung 45 für den Benutzer angezeigt.

In vielen Fällen ist es nicht gewünscht, Flugeinrichtungen durch den öffentlichen Raum zu bewegen. Es kann daher vorteilhaft sein, die Flugbewegungen auf z.B. eigene Grundstücke 37, 42 einzuschränken. Dies wird in dem in Fig. 5 dargestellten Verfahren durch zwei Ansätze erreicht. Zum einen werden Zielpositionen 36, 41 vorgegeben, die vertikal oberhalb der jeweiligen Parkposition 35, 40 liegen. Zum anderen erfolgt die Steuerung derart, dass ein Flugbereich innerhalb der Grenzen der Grundstücke 37, 42 vorgegeben wird, der eine vorgegebene Höhe, z.B. 100 m oder 150 m aufweist. Die Flugeinrichtungen 35, 40 weisen GPS Empfänger auf und eine Ist-Position wird laufend mit den Grenzen des Flugbereichs verglichen. Wird ein Mindestabstand zu einer der Grenzen ermittelt, so erfolgt eine automatische Bewegung zur Mitte des Flugbereichs hin. Der Flugbereich wird zudem im Rahmen der Positionsanpassung zur Erfüllung der Qualitätsbedingung berücksichtigt.

### Bezugszeichenliste

- 1: Zählereinrichtung
- 2: Zählereinrichtung
- 3: Zählereinrichtung
- 4: Flugeinrichtung
- 5: Zentraleinrichtung
- 6: Zielposition
- 7: Umfeldobjekt
- 8: Umfeldobjekt
- 9: Störquelle
- 10: Pfeil
- 11: Pfeil
- 12: Position
- 13: Pfeil
- 14: Position
- 15: Gebäude
- 16: Zählereinrichtung
- 17: Zielposition
- 18: Richtcharakteristik
- 19: Pfeil
- 20: Flugeinrichtung
- 21: Boden
- 22: Flugeinrichtung
- 23: Bewegungseinrichtung
- 24: Empfangseinrichtung
- 25: Steuereinrichtung
- 26: Kommunikationseinrichtung
- 27: Trageeinrichtung
- 28: Antenne
- 29: Umsetzer
- 30: Phasenschieber
- 31: Additionsstufe
- 32: Störquelle
- 33: Zentraleinrichtung
- 34: Flugeinrichtung
- 35: Parkposition
- 36: Zielposition
- 37: Grundstück
- 38: Pfeil
- 39: Flugeinrichtung
- 40: Parkposition
- 41: Zielposition
- 42: Grundstück
- 43: Pfeil
- 44: Eingabeeinrichtung
- 45: Ausgabeeinrichtung

## Patentansprüche

1. Verfahren zur Kommunikation zwischen wenigstens einer Zählereinrichtung (1, 2, 3, 16) und einer Flugeinrichtung (4, 20, 22, 34, 39), wobei die Zählereinrichtung (1, 2, 3, 16) zum Erfassen eines Verbrauchs und/oder zum Sammeln erfasster Verbrauchsdaten ausgebildet ist, wobei die Flugeinrichtung (4, 20, 22, 34, 39) die folgenden Schritte durchführt:
a) Bewegung der flugfähigen Flugeinrichtung (4, 20, 22, 34, 39) zu einer der Zählereinrichtung (1, 2, 3, 16) zugeordneten, vorgegebenen Zielposition (6, 17, 36, 41),
b) Empfang von Empfangssignalen auf einem der Zählereinrichtung (1, 2, 3, 16) zugeordneten Funkkanal durch eine Empfangseinrichtung (24) der Flugeinrichtung (4, 20, 22, 34, 39) und Ermitteln wenigstens einer eine Kommunikationsqualität auf dem Funkkanal betreffenden Qualitätsinformation in Abhängigkeit der Empfangssignale, wobei bei Nichterfüllung einer Qualitätsbedingung, deren Erfüllung von der Qualitätsinformation abhängt, der Empfang von Empfangssignalen und die Ermittlung der Qualitätsinformation wiederholt werden, nachdem ein Kommunikationsprotokoll zur Kommunikation mit der Zählereinrichtung (1, 2, 3, 16) gewechselt wurde und/oder während eine Position (12, 14) der Flugeinrichtung (4, 20, 22) und/oder eine Richtcharakteristik (18) der Empfangseinrichtung (24) verändert werden, bis die Qualitätsbedingung oder eine Abbruchbedingung erfüllt ist, und bei Erfüllung der Qualitätsbedingung
c) Erfassen wenigstens einer durch die Zählereinrichtung (1, 2, 3, 16) gesendeten Zählerinformation durch Auswertung der Empfangssignale und/oder Senden einer Steuernachricht zur Steuerung des Betriebs der Zählereinrichtung (1, 2, 3, 16) an die Zählereinrichtung (1, 2, 3, 16).

2. Verfahren nach Anspruch 1, **dadurch gekennzeichnet, dass** die Qualitätsinformation einen Summenleistungspegel aller Empfangssignale und/oder einen Zählerleistungspegel jener Empfangssignale, die von der Zählereinrichtung (1, 2, 3, 16) gesendet wurden, und/oder einen weiterer Leistungspegel weiterer Empfangssignale, die gegenüber den von der Zählereinrichtung (1, 2, 3, 16) gesendeten Empfangssignalen zeitlich und/oder spektral versetzt empfangen werden, und/oder ein Signal-zu-Rauschverhältnis und/oder eine Kanallast und/oder eine auf von der Zählereinrichtung (1, 2, 3, 16) gesendete Datenpakete bezogene Fehlerrate und/oder ein Maß für durch das genutzte Kommunikationsprotokoll korrigierbare Fehler in den Datenpaketen beschreibt.

3. Verfahren nach Anspruch 2, **dadurch gekennzeichnet, dass** die Qualitätsbedingung oder eine von mehreren Teilbedingungen, die zur Auswertung der Qualitätsbedingung logisch verknüpft werden, genau dann erfüllt ist, wenn innerhalb eines vorgegebenen Messintervalls der Summenleistungspegel und/oder der weitere Leistungspegel und/oder der Kehrwert des Signal-zu-Rauschverhältnisses und/oder die Kanallast für zumindest einen vorgegebenen Zeitanteil des Messintervalls kleiner als ein jeweiliger vorgegebener Referenzwert sind.

4. Verfahren nach Anspruch 3, **dadurch gekennzeichnet, dass** in Abhängigkeit eines Umfeldmodells, das zumindest die jeweilige Position der wenigstens einen Zählereinrichtung (1, 2, 3, 16) beschreibt, ein Prognosewert für den Zählerleistungspegel ermittelt wird, wonach der Referenzwert in Abhängigkeit des Prognosewertes bestimmt wird.

5. Verfahren nach einem der vorangehenden Ansprüche, **dadurch gekennzeichnet, dass** die Richtcharakteristik (18) verändert wird, indem die Orientierung der Flugeinrichtung (4, 20, 22, 34, 39) verändert wird.

6. Verfahren nach einem der vorangehenden Ansprüche, **dadurch gekennzeichnet, dass** die Empfangseinrichtung (24) mehrere Antennen (28) aufweist, wobei zur Ermittlung der Empfangssignale durch die Antennen (28) empfangene Antennensignale zu einem Summensignal addiert werden, wobei die Richtcharakteristik (18) durch eine Veränderung einer jeweiligen Phasenlage und/oder einer jeweiligen Amplitude der Antennensignale in dem Summensignal verändert wird.

7. Verfahren nach einem der vorangehenden Ansprüche, **dadurch gekennzeichnet, dass** die Zählerinformation durch die Flugeinrichtung (4, 20, 22, 34, 39) nach der Erfassung an eine Zentraleinrichtung (5, 33) gesendet wird und/oder dass die an die Zählereinrichtung (1, 2, 3, 16) gesendete Steuernachricht vorangehend durch die Flugeinrichtung (4, 20, 22, 34, 39) von der Zentraleinrichtung (5, 33) empfangen wird.

8. Verfahren nach Anspruch 7, **dadurch gekennzeichnet, dass** mehrere Flugeinrichtungen (4, 20, 22, 34, 39) genutzt werden, wobei für wenigstens eine der Flugeinrichtungen (4, 20, 22, 34, 39) das Senden der Zählerinformation an die Zentraleinrichtung (5, 33) und/oder das Empfangen der Steuernachricht von der Zentraleinrichtung (5, 33) indirekt über wenigstens eine als Netzwerkknoten dienende weitere der Flugeinrichtung (4, 20, 22, 34, 39) erfolgt.

9. Verfahren nach Anspruch 7 oder 8, **dadurch gekennzeichnet, dass** die Zählerinformation oder eine aus der Zählerinformation abgeleitete Information durch eine Ausgabeeinrichtung (45) der Zentraleinrichtung (5, 33) an einen Benutzer bereitgestellt wird und/oder dass durch eine Benutzereingabe an einer Eingabeeinrichtung (44) der Zentraleinrichtung (5, 33) das Senden der Steuernachricht über die Flugeinrichtung (4, 20, 22, 34, 39) an die Zählereinrichtung (1, 2, 3, 16) ausgelöst wird.

10. Verfahren nach einem der vorangehenden Ansprüche, **dadurch gekennzeichnet, dass** ein Flugbereich für die Flugeinrichtung (4, 20, 22, 34, 39) vorgegeben wird, wobei die Bewegung der Flugeinrichtung (4, 20, 22, 34, 39) zu der Zielposition (6, 17, 36, 41) und die Veränderung der Position (12, 14) der Flugeinrichtung (4, 20, 22, 34, 39) derart gesteuert werden, dass sich die Flugeinrichtung (4, 20, 22, 34, 39) stets innerhalb des Flugbereichs befindet.

11. Verfahren nach Anspruch 10, **dadurch gekennzeichnet, dass** mehrere Flugeinrichtungen (4, 20, 22, 34, 39) genutzt werden, wobei die den einzelnen Flugeinrichtungen (4, 20, 22, 34, 39) zugeordneten Flugbereiche voneinander beabstandet sind.

12. Verfahren nach einem der vorangehenden Ansprüche, **dadurch gekennzeichnet, dass** die Flugeinrichtung (4, 20, 22, 34, 39) vor Schritt a) in einer bodenseitigen Parkposition (35, 40) steht und nach Schritt c) in der oder einer weiteren bodenseitigen Parkposition (35, 40) abgestellt wird, wobei die Flugeinrichtung (4, 20, 22, 34, 39) an der Zielposition (6, 17, 36, 41) und/oder während der Veränderung der Position (12, 14) der Flugeinrichtung (4, 20, 22) in Schritt b) ohne Bodenkontakt fliegt.

13. Verfahren nach Anspruch 12, **dadurch gekennzeichnet, dass** die Zielposition (6, 17, 36, 41) und die Parkposition (35, 40) an der gleichen horizontalen Position vertikal übereinander liegen.

14. Verfahren nach Anspruch 12 oder 13, **dadurch gekennzeichnet, dass** die Flugeinrichtung (4, 20, 22, 34, 39) nach einem Verlassen der Parkposition (35, 40) vor und/oder während der Erfassung der Zählerinformation um eine Hochachse der Flugeinrichtung (4, 20, 22, 34, 39) rotiert wird.

15. Verfahren nach einem der Ansprüche 12 bis 14, **dadurch gekennzeichnet, dass** die Flugeinrichtung (4, 20, 22, 34, 39) bis zu einem Empfang eines Aktivierungssignals und/oder bis zu einem vorgegebenen Aktivierungszeitpunkt in der Parkposition (35, 40) stehen bleibt, wobei sie bei Empfang des Aktivierungssignals und/oder zu dem Aktivierungszeitpunkt zu der Zielposition (6, 17, 36, 41) bewegt wird, um die Zählerinformation zu Erfassen und/oder die Steuernachricht zu senden und/oder als Netzwerkknoten in einem Netzwerk zur Übermittlung der Zählerinformation und/oder der Steuernachricht zu dienen.

16. Verfahren nach einem der vorangehenden Ansprüche, **dadurch gekennzeichnet, dass** Zählerinformationen mehrerer Zählereinrichtungen (1, 2, 3, 16) fernausgelesen werden, denen die gleiche Zielposition (6, 17, 36, 41) zugeordnet ist, wobei nach Erfassung der Zählerinformationen eines Teils dieser Zählereinrichtungen (1, 2, 3, 16) die Position (12, 14) der Flugeinrichtung (4, 20, 22, 34, 39) und/oder die Richtcharakteristik (18) in Abhängigkeit einer Positionsinformation verändert wird, die eine Position wenigstens einer Zählereinrichtung (1, 2, 3, 16) beschreibt, deren Zählerinformation noch nicht erfasst wurde.

17. Verfahren nach einem der vorangehenden Ansprüche, **dadurch gekennzeichnet, dass** die Veränderung der Position (12, 14) der Flugeinrichtung (4, 20, 22, 34, 39) und/oder der Richtcharakteristik (18) derart erfolgt, dass die Qualitätsinformation oder wenigstens eine der Qualitätsinformationen oder eine aus der Qualitätsinformation oder aus wenigstens einer der Qualitätsinformationen abgeleitete Größe maximiert oder minimiert wird.

18. Verfahren nach einem der vorangehenden Ansprüche, **dadurch gekennzeichnet, dass** eine Position wenigstens einer zu den Empfangssignalen beitragenden Störquelle (9, 32) ermittelt wird, wonach die Richtcharakteristik (18) derart verändert wird, dass eine Empfangsempfindlichkeit der Empfangseinrichtung (24) in Richtung der Störquelle (9, 32) reduziert wird, und/oder wonach die Position (12, 14) der Flugeinrichtung (4, 20, 22, 34, 39) in Abhängigkeit von das Umfeld der Flugeinrichtung (4, 20, 22, 34, 39) beschreibenden, vorgegebenen Umfelddaten derart verändert wird, dass sich wenigstens ein durch die Umfelddaten beschriebenes Umfeldobjekt (7, 8) zwischen der Störquelle (9, 32) und der Flugeinrichtung (4, 20, 22, 34, 39) befindet.

19. Verfahren nach einem der vorangehenden Ansprüche, **dadurch gekennzeichnet, dass** das Umfeld der Flugeinrichtung (4, 20, 22, 34, 39) beschreibende Umfelddaten vorgegeben werden, wobei die Position (12, 14) der Flugeinrichtung (4, 20, 22, 34, 39) derart verändert wird, dass wenigstens ein durch die Umfelddaten beschriebenes Umfeldobjekt (7, 8) von einer Verbindungslinie zwischen der Empfangseinrichtung (24) und der Zählereinrichtung (1, 2, 3, 16) und/oder von einem Rotationsellipsoid, dessen Brennpunkte die Empfangseinrichtung (24) und die Zählereinrichtung (1, 2, 3, 16) sind, beabstandet ist.

20. Verfahren nach einem der vorangehenden Ansprüche, **dadurch gekennzeichnet, dass** die Zielposition (6, 17, 36, 41) und/oder ein Durchführungszeitpunkt der Schritte a) bis c) und/oder das zur Kommunikation mit der Zählereinrichtung (1, 2, 3, 16) genutzte Kommunikationsprotokoll und/oder eine Reihenfolge, in der mehrere Zielpositionen (6, 17, 36, 41), an denen Zählerinformationen erfasst und/oder Steuernachrichten gesendet werden sollen, angeflogen werden, in Abhängigkeit einer in einem vorangehenden Durchlauf der Schritte a) bis c) für die zugeordnete Zählereinrichtung (1, 2, 3, 16) ermittelten Qualitätsinformation und/oder in Abhängigkeit einer Position (12, 14) der Flugeinrichtung (4, 20, 22, 34, 39) und/oder einer Richtcharakteristik (18), für die die Qualitätsbedingung jeweils in einem der vorangehenden Durchläufe der Schritte a) bis c) erfüllt war, vorgegeben werden.

21. Verfahren nach einem der vorangehenden Ansprüche, **dadurch gekennzeichnet, dass** die Zielposition (6, 17, 36, 41) und/oder das zur Kommunikation mit der Zählereinrichtung (1, 2, 3, 16) genutzte Kommunikationsprotokoll und/oder eine Reihenfolge, in der mehrere Zielpositionen (6, 17, 36, 41), an denen Zählerinformationen erfasst und/oder Steuernachrichten gesendet werden sollen, angeflogen werden, in Abhängigkeit von einem Durchführungszeitpunkt der Schritte a) bis c) vorgegeben werden.

22. Verfahren nach einem der vorangehenden Ansprüche, **dadurch gekennzeichnet, dass** die Vorgabe der Zielposition (6, 17, 36, 41) und/oder die Veränderung der Position (12, 14) der Flugeinrichtung (4, 20, 22, 34, 39) und/oder der Richtcharakteristik (18) in Abhängigkeit einer Position der Zählereinrichtung (1, 2, 3, 16) und/oder wenigstens einer den Empfang der Zählerinformation störenden Störquelle (9, 32) erfolgt, wobei die Position durch die Flugeinrichtung (4, 20, 22, 34, 39) oder durch mehrere zusammenwirkende Flugeinrichtungen (4, 20, 22, 34, 39) durch Triangulation und/oder durch Bestimmung wenigstens einer Laufzeit eines Sendesignals der Zählereinrichtung (1, 2, 3, 16) und/oder der Störquelle (9, 32) ermittelt wird.

23. Verfahren nach einem der vorangehenden Ansprüche, **dadurch gekennzeichnet, dass** in Abhängigkeit der Steuernachricht durch die Zählereinrichtung (1, 2, 3, 16) ein Öffnungsgrad eines Ventils der Zählereinrichtung (1, 2, 3, 16) verändert und/oder eine interne Uhr der Zählereinrichtung (1, 2, 3, 16) umgestellt und/oder eine einen Zusammenhang zwischen dem Verbrauch und/oder den Verbrauchsdaten und der Zählerinformation beschreibende Berechnungsgröße geändert und/oder ein den Betrieb der Zählereinrichtung (1, 2, 3, 16) steuerndes Steuerprogramm geändert und/oder ein zum Senden der Zählerinformation genutztes Funkprotokoll geändert wird.

24. Flugeinrichtung mit wenigstens einer Bewegungseinrichtung (23) zur Bewegung der Flugeinrichtung (4, 20, 22, 34, 39), wenigstens einer Empfangseinrichtung (24) und einer Steuereinrichtung (25) zur Steuerung der Bewegungseinrichtung (23), **dadurch gekennzeichnet, dass** die Flugeinrichtung (4, 20, 22, 34, 39) zur Durchführung des Verfahrens nach einem der vorangehenden Ansprüche ausgebildet ist.

25. Flugeinrichtung nach Anspruch 24, **dadurch gekennzeichnet, dass** die Flugeinrichtung (4, 20, 22, 34, 39) ein Quadrocopter ist.

26. Flugeinrichtung nach Anspruch 24 oder 25, **dadurch gekennzeichnet, dass** die Flugeinrichtung (4, 20, 22, 34, 39) eine Kommunikationseinrichtung (26) aufweist, durch die von einer ersten weiteren Flugeinrichtung an die Flugeinrichtung (4, 20, 22, 34, 39) übermittelte Daten an eine zweite weitere Flugeinrichtung und/oder eine Zentraleinrichtung (5, 33) weiterleitbar sind und/oder umgekehrt.

27. Flugeinrichtung nach einem der Ansprüche 24 bis 26, **dadurch gekennzeichnet, dass** die Flugeinrichtung (4, 20, 22, 34, 39) eine Trageeinrichtung (27) aufweist, durch die zuzustellende Sendungen an der Flugeinrichtung (4, 20, 22, 34, 39) halterbar und automatisch ablegbar sind.

28. Flugeinrichtung nach einem der Ansprüche 24 bis 27, **dadurch gekennzeichnet, dass** die Flugeinrichtung (4, 20, 22, 34, 39) dazu eingerichtet ist, über zumindest zwei wählbare, unterschiedliche Kommunikationsprotokolle mit der Zählereinrichtung (1, 2, 3, 16) zu kommunizieren, die sich bezüglich der bei gleicher Sendeleistung erreichbaren Reichweiten und/oder Datenraten und/oder bezüglich der Störfestigkeit gegenüber Störquellen (9, 32) unterscheiden.

29. Erfassungssystem zum Erfassen eines Verbrauchs, **dadurch gekennzeichnet, dass** es mehrere verstreut angeordnete Zählereinrichtungen (1, 2, 3, 16), durch die jeweils ein Verbrauch erfassbar ist und/oder erfasste Verbrauchsdaten sammelbar sind, und wenigstens eine Flugeinrichtung (4, 20, 22, 34, 39) nach einem der Ansprüche 24 bis 28, durch die Zählerinformationen der Zählereinrichtungen (1, 2, 3, 16) erfassbar sind, umfasst.

## Claims

1. Method for communication between at least one meter device (1, 2, 3, 16) and a flying device (4, 20, 22, 34, 39), wherein the meter device (1, 2, 3, 16) is configured for recording a consumption and/or for collecting captured consumption data, wherein the flying device (4, 20, 22, 34, 39) performs the following steps:
a) movement of the flying device (4, 20, 22, 34, 39), which is capable of flight, to a prescribed target position (6, 17, 36, 41) associated with the meter device (1, 2, 3, 16),
b) reception of received signals on a radio channel associated with the meter device (1, 2, 3, 16) by a reception device (24) of the flying device (4, 20, 22, 34, 39) and ascertaining at least one piece of quality information, relating to a communication quality on the radio channel, on the basis of the received signals, wherein nonsatisfaction of a quality condition, satisfaction of which is dependent on the piece of quality information, results in the reception of received signals and the ascertainment of the piece of quality information being repeated after a communication protocol for communication with the meter device (1, 2, 3, 16) has been changed and/or while a position (12, 14) of the flying device (4, 20, 22) and/or a directivity (18) of the reception device (24) are altered until the quality condition or a termination condition is satisfied, and in the event of satisfaction of the quality condition
c) capturing at least one piece of meter information sent by the meter device (1, 2, 3, 16) by means of evaluation of the received signals and/or sending a control message for controlling the operation of the meter device (1, 2, 3, 16) to the meter device (1, 2, 3, 16).

2. Method according to Claim 1, **characterized in that** the piece of quality information describes a summed power level for all received signals and/or a meter power level for those received signals that have been sent by the meter device (1, 2, 3, 16), and/or a further power level for further received signals received with a temporal and/or spectral stagger in comparison with the received signals sent by the meter device (1, 2, 3, 16), and/or a signal-to-noise ratio and/or a channel load and/or an error rate based on data packets sent by the meter device (1, 2, 3, 16) and/or a measure of errors in the data packets that are corrigible by the communication protocol used.

3. Method according to Claim 2, **characterized in that** the quality condition or one of multiple subconditions logically combined for evaluation of the quality condition is satisfied right when, within a prescribed measurement interval, the summed power level and/or the further power level and/or the reciprocal of the signal-to-noise ratio and/or the channel load for at least one prescribed time component of the measurement interval are less than a respective prescribed reference value.

4. Method according to Claim 3, **characterized in that** an environment model describing at least the respective position of the at least one meter device (1, 2, 3, 16) is taken as a basis for ascertaining a forecast value for the meter power level, after which the reference value is determined on the basis of the forecast value.

5. Method according to one of the preceding claims, **characterized in that** the directivity (18) is altered by virtue of the orientation of the flying device (4, 20, 22, 34, 39) being altered.

6. Method according to one of the preceding claims, **characterized in that** the reception device (24) has multiple antennas (28), wherein ascertainment of the received signals involves antenna signals received by the antennas (28) being added to form a summed signal, wherein the directivity (18) is altered by means of alteration of a respective phase and/or of a respective amplitude of the antenna signals in the summed signal.

7. Method according to one of the preceding claims, **characterized in that** the piece of meter information is sent to a central facility (5, 33) by the flying device (4, 20, 22, 34, 39) after capture and/or **in that** the control message sent to the meter device (1, 2, 3, 16) is previously received from the central facility (5, 33) by the flying device (4, 20, 22, 34, 39).

8. Method according to Claim 7, **characterized in that** multiple flying devices (4, 20, 22, 34, 39) are used, wherein for at least one of the flying devices (4, 20, 22, 34, 39) the sending of the piece of meter information to the central facility (5, 33) and/or the receiving of the control message from the central facility (5, 33) are effected indirectly via at least one further flying device (4, 20, 22, 34, 39) serving as a network node.

9. Method according to Claim 7 or 8, **characterized in that** the piece of meter information or a piece of information derived from the piece of meter information is provided to a user by an output device (45) of the central facility (5, 33) and/or **in that** a user input on an input device (44) of the central facility (5, 33) triggers the sending of the control message to the meter device (1, 2, 3, 16) via the flying device (4, 20, 22, 34, 39) .

10. Method according to one of the preceding claims, **characterized in that** a flying area for the flying device (4, 20, 22, 34, 39) is prescribed, wherein the movement of the flying device (4, 20, 22, 34, 39) to the target position (6, 17, 36, 41) and the alteration of the position (12, 14) of the flying device (4, 20, 22, 34, 39) are controlled such that the flying device (4, 20, 22, 34, 39) is always within the flying area.

11. Method according to Claim 10, **characterized in that** multiple flying devices (4, 20, 22, 34, 39) are used, wherein the flying areas associated with the individual flying devices (4, 20, 22, 34, 39) are separated from one another.

12. Method according to one of the preceding claims, **characterized in that** the flying device (4, 20, 22, 34, 39) is in a ground-based parking position (35, 40) before step a) and, after step c), is parked in the or a further ground-based parking position (35, 40), wherein the flying device (4, 20, 22, 34, 39) flies without ground contact at the target position (6, 17, 36, 41) and/or during the alteration of the position (12, 14) of the flying device (4, 20, 22) in step b).

13. Method according to Claim 12, **characterized in that** the target position (6, 17, 36, 41) and the parking position (35, 40) are vertically above one another at the same horizontal position.

14. Method according to Claim 12 or 13, **characterized in that** after leaving the parking position (35, 40) the flying device (4, 20, 22, 34, 39) is rotated about a vertical axis of the flying device (4, 20, 22, 34, 39) before and/or during capture of the piece of meter information.

15. Method according to one of Claims 12 to 14, **characterized in that** the flying device (4, 20, 22, 34, 39) remains at a standstill in the parking position (35, 40) up until reception of an activation signal and/or up until a prescribed activation time, wherein on reception of the activation signal and/or at the activation time it is moved to the target position (6, 17, 36, 41) in order to capture the piece of meter information and/or to send the control message and/or to be used as a network node in a network for transmitting the piece of meter information and/or the control message.

16. Method according to one of the preceding claims, **characterized in that** pieces of meter information from multiple meter devices (1, 2, 3, 16) having the same associated target position (6, 17, 36, 41) are read remotely, wherein capture of the pieces of meter information from some of these meter devices (1, 2, 3, 16) is followed by the position (12, 14) of the flying device (4, 20, 22, 34, 39) and/or the directivity (18) being altered on the basis of a piece of position information describing a position of at least one meter device (1, 2, 3, 16) whose piece of meter information has not yet been captured.

17. Method according to one of the preceding claims, **characterized in that** alteration of the position (12, 14) of the flying device (4, 20, 22, 34, 39) and/or of the directivity (18) is effected such that the piece of quality information or at least one of the pieces of quality information or a variable derived from the piece of quality information or from at least one of the pieces of quality information is maximized or minimized.

18. Method according to one of the preceding claims, **characterized in that** a position of at least one interference source (9, 32) contributing to the received signals is ascertained, after which the directivity (18) is altered such that a reception sensitivity of the reception device (24) in the direction of the interference source (9, 32) is reduced, and/or after which the position (12, 14) of the flying device (4, 20, 22, 34, 39) is altered on the basis of prescribed environment data describing the environment of the flying device (4, 20, 22, 34, 39), such that at least one environment object (7, 8) described by the environment data is between the interference source (9, 32) and the flying device (4, 20, 22, 34, 39).

19. Method according to one of the preceding claims, **characterized in that** environment data describing the environment of the flying device (4, 20, 22, 34, 39) are prescribed, wherein the position (12, 14) of the flying device (4, 20, 22, 34, 39) is altered such that at least one environment object (7, 8) described by the environment data is separated from a connecting line between the reception device (24) and the meter device (1, 2, 3, 16) and/or from an ellipsoid of rotation whose focal points are the reception device (24) and the meter device (1, 2, 3, 16).

20. Method according to one of the preceding claims, **characterized in that** the target position (6, 17, 36, 41) and/or a time of performance of steps a) to c) and/or the communication protocol used for communication with the meter device (1, 2, 3, 16) and/or an order in which multiple target positions (6, 17, 36, 41) at which pieces of meter information are supposed to be captured and/or control messages are supposed to be sent are flown to are prescribed on the basis of a piece of quality information ascertained for the associated meter device (1, 2, 3, 16) in a preceding pass of steps a) to c) and/or on the basis of a position (12, 14) of the flying device (4, 20, 22, 34, 39) and/or a directivity (18) for which the quality condition was satisfied in one of the preceding passes of steps a) to c) in each case.

21. Method according to one of the preceding claims, **characterized in that** the target position (6, 17, 36, 41) and/or the communication protocol used for communication with the meter device (1, 2, 3, 16) and/or an order in which multiple target positions (6, 17, 36, 41) at which pieces of meter information are supposed to be captured and/or control messages are supposed to be sent are flown to are prescribed on the basis of a time of performance of steps a) to c).

22. Method according to one of the preceding claims, **characterized in that** prescription of the target position (6, 17, 36, 41) and/or alteration of the position (12, 14) of the flying device (4, 20, 22, 34, 39) and/or of the directivity (18) is effected on the basis of a position of the meter device (1, 2, 3, 16) and/or at least one interference source (9, 32) interfering with reception of the piece of meter information, wherein the position is ascertained by the flying device (4, 20, 22, 34, 39) or by multiple cooperating flying devices (4, 20, 22, 34, 39) by means of triangulation and/or by means of determination of at least one propagation time of a transmission signal from the meter device (1, 2, 3, 16) and/or the interference source (9, 32).

23. Method according to one of the preceding claims, **characterized in that** the control message is taken as a basis for the meter device (1, 2, 3, 16) to alter a degree of opening of a valve of the meter device (1, 2, 3, 16) and/or to adjust an internal clock of the meter device (1, 2, 3, 16) and/or to change a computation variable describing a relationship between the consumption and/or the consumption data and the piece of meter information and/or to change a control program controlling operation of the meter device (1, 2, 3, 16) and/or to change a radio protocol used for sending the piece of meter information.

24. Flying device having at least one movement device (23) for moving the flying device (4, 20, 22, 34, 39), at least one reception device (24) and a control device (25) for controlling the movement device (23), **characterized in that** the flying device (4, 20, 22, 34, 39) is configured for performing the method according to one of the preceding claims.

25. Flying device according to Claim 24, **characterized in that** the flying device (4, 20, 22, 34, 39) is a quadrocopter.

26. Flying device according to Claim 24 or 25, **characterized in that** the flying device (4, 20, 22, 34, 39) has a communication device (26) by means of which data transmitted from a first further flying device to the flying device (4, 20, 22, 34, 39) are forwardable to a second further flying device and/or a central facility (5, 33) and/or vice versa.

27. Flying device according to one of Claims 24 to 26, **characterized in that** the flying device (4, 20, 22, 34, 39) has a carrying device (27) by means of which consignments to be delivered are supportable on the flying device (4, 20, 22, 34, 39) and automatically droppable.

28. Flying device according to one of Claims 24 to 27, **characterized in that** the flying device (4, 20, 22, 34, 39) is set up to use at least two selectable, different communication protocols to communicate with the meter device (1, 2, 3, 16), said communication protocols differing in terms of the ranges and/or data rates achievable for the same transmission power and/or in terms of interference immunity with respect to interference sources (9, 32).

29. Recording system for recording a consumption, **characterized in that** it comprises multiple meter devices (1, 2, 3, 16) arranged in a scattered manner by means of which a respective consumption is recordable and/or captured consumption data are collectable, and at least one flying device (4, 20, 22, 34, 39) according to one of Claims 24 to 28 by means of which pieces of meter information from the meter devices (1, 2, 3, 16) are capturable.

## Revendications

1. Procédé de communication entre au moins un dispositif compteur (1, 2, 3, 16) et un dispositif volant (4, 20, 22, 34, 39), le dispositif compteur (1, 2, 3, 16) étant configuré pour acquérir une consommation et/ou pour collecter des données de consommation acquises, le dispositif volant (4, 20, 22, 34, 39) exécutant les étapes suivantes :
a) déplacement du dispositif volant (4, 20, 22, 34, 39) apte au vol vers une position cible (6, 17, 36, 41) prédéfinie associée au dispositif compteur (1, 2, 3, 16),
b) réception de signaux de réception sur un canal radioélectrique associé au dispositif compteur (1, 2, 3, 16) par un dispositif de réception (24) du dispositif volant (4, 20, 22, 34, 39) et détermination d'au moins une information de qualité concernant une qualité de communication sur le canal radioélectrique en fonction des signaux reçus, la non-satisfaction d'une condition de qualité dont la satisfaction dépend de l'information de qualité entraînant la répétition de la réception de signaux reçus et de la détermination de l'information de qualité après avoir changé un protocole de communication servant à la communication avec le dispositif compteur (1, 2, 3, 16) et/ou pendant qu'une position (12, 14) du dispositif volant (4, 20, 22) et/ou une caractéristique d'orientation (18) du dispositif de réception (24) sont modifiés, jusqu'à ce que la condition de qualité ou une condition d'interruption soit satisfaite et, lorsque la condition de qualité est satisfaite,
c) acquisition d'au moins une information de compteur envoyée par le dispositif compteur (1, 2, 3, 16) par interprétation des signaux reçus et/ou envoi d'un message de commande servant à commander le dispositif compteur (1, 2, 3, 16) au dispositif compteur (1, 2, 3, 16).

2. Procédé selon la revendication 1, **caractérisé en ce que** l'information de qualité décrit un niveau de puissance total de tous les signaux reçus et/ou un niveau de puissance de compteur des signaux reçus qui ont été envoyés par le dispositif compteur (1, 2, 3, 16) et/ou un niveau de puissance supplémentaire de signaux reçus supplémentaires qui ont été reçus avec un décalage spectral et/ou temporel par rapport aux signaux reçus envoyés par le dispositif compteur (1, 2, 3, 16) et/ou un rapport signal/bruit et/ou une charge de canal et/ou un taux d'erreurs rapporté aux paquets de données envoyés par le dispositif compteur (1, 2, 3, 16) et/ou une mesure pour les erreurs pouvant être corrigées par le protocole de communication utilisé dans les paquets de données.

3. Procédé selon la revendication 2, **caractérisé en ce que** la condition de qualité, ou l'une parmi plusieurs conditions partielles qui sont liées logiquement pour l'interprétation de la condition de qualité, est précisément satisfaite lorsque, à l'intérieur d'un intervalle de mesure prédéfini, le niveau de puissance total et/ou le niveau de puissance supplémentaire et/ou l'inverse du rapport signal/bruit et/ou la charge de canal sont inférieurs à une valeur de référence respectivement prédéfinie pendant au moins une fraction de temps prédéfinie de l'intervalle de mesure.

4. Procédé selon la revendication 3, **caractérisé en ce qu'**une valeur prévisionnelle pour le niveau de puissance de compteur est déterminée en fonction d'un modèle d'environnement qui décrit au moins la position respective de l'au moins un dispositif compteur (1, 2, 3, 16), après quoi la valeur de référence est définie en fonction de la valeur prévisionnelle.

5. Procédé selon l'une des revendications précédentes, **caractérisé en ce que** la caractéristique d'orientation est modifiée (18) en modifiant l'orientation du dispositif volant (4, 20, 22, 34, 39).

6. Procédé selon l'une des revendications précédentes, **caractérisé en ce que** le dispositif de réception (24) possède plusieurs antennes (28), les signaux d'antenne reçus par les antennes (28) étant additionnés en un signal total en vue de déterminer les signaux reçus, la caractéristique d'orientation (18) étant modifiée par une modification de la position de phase respective et/ou une amplitude respective des signaux d'antenne dans le signal total.

7. Procédé selon l'une des revendications précédentes, **caractérisé en ce que** l'information de compteur est envoyée à un dispositif central (5, 33) par le dispositif volant (4, 20, 22, 34, 39) après l'acquisition et/ou **en ce que** le message de commande envoyé au dispositif compteur (1, 2, 3, 16) est précédemment reçu par le dispositif volant (4, 20, 22, 34, 39) en provenance du dispositif central (5, 33).

8. Procédé selon la revendication 7, **caractérisé en ce que** plusieurs dispositifs volants (4, 20, 22, 34, 39) sont utilisés, l'envoi de l'information de compteur au dispositif central (5, 33) et/ou la réception du message de commande en provenance du dispositif central (5, 33), pour au moins l'un des dispositifs volants (4, 20, 22, 34, 39) s'effectuant indirectement par le biais d'au moins un dispositif volant (4, 20, 22, 34, 39) supplémentaire servant de nœud de réseau.

9. Procédé selon la revendication 7 ou 8, **caractérisé en ce que** l'information de compteur ou une information dérivée de l'information de compteur est fournie à un utilisateur par un dispositif de délivrance (45) du dispositif central (5, 33) et/ou **en ce que** l'envoi du message de commande au dispositif compteur (1, 2, 3, 16) par le biais du dispositif volant (4, 20, 22, 34, 39) est déclenché par une saisie d'utilisateur au niveau d'un dispositif de saisie (44) du dispositif central (5, 33).

10. Procédé selon l'une des revendications précédentes, **caractérisé en ce qu'**une zone de vol est prédéfinie pour le dispositif volant (4, 20, 22, 34, 39), le mouvement du dispositif volant (4, 20, 22, 34, 39) vers la position cible (6, 17, 36, 41) et la modification de la position (12, 14) du dispositif volant (4, 20, 22, 34, 39) étant commandés de telle sorte que le dispositif volant (4, 20, 22, 34, 39) se trouve constamment à l'intérieur de la zone de vol.

11. Procédé selon la revendication 10, **caractérisé en ce que** plusieurs dispositifs volants (4, 20, 22, 34, 39) sont utilisés, les zones de vol associées aux dispositifs volants (4, 20, 22, 34, 39) individuels étant espacées les unes des autres.

12. Procédé selon l'une des revendications précédentes, **caractérisé en ce qu'**avant l'étape a), le dispositif volant (4, 20, 22, 34, 39) se trouve dans une position de stationnement (35, 40) du côté du sol et, après l'étape c), est mis à l'arrêt dans la ou une autre position de stationnement (35, 40), le dispositif volant (4, 20, 22, 34, 39) volant sans contact avec le sol au niveau de la position cible (6, 17, 36, 41) et/ou pendant la modification de la position (12, 14) du dispositif volant (4, 20, 22) à l'étape b).

13. Procédé selon la revendication 12, **caractérisé en ce que** la position cible (6, 17, 36, 41) et la position de stationnement (35, 40) se trouvent verticalement l'une au-dessus de l'autre à la même position horizontale.

14. Procédé selon la revendication 12 ou 13, **caractérisé en ce que** le dispositif volant (4, 20, 22, 34, 39), après avoir quitté la position de stationnement (35, 40) et avant et/ou pendant l'acquisition de l'information de compteur, effectue une rotation autour d'un axe vertical du dispositif volant (4, 20, 22, 34, 39).

15. Procédé selon l'une des revendications 12 à 14, **caractérisé en ce que** le dispositif volant (4, 20, 22, 34, 39) reste immobile dans la position de stationnement (35, 40) jusqu'à la réception d'un signal d'activation et/ou jusqu'à un instant d'activation prédéfini, celui-ci se déplaçant vers la position cible (6, 17, 36, 41) lors de la réception du signal d'activation et/ou à l'instant d'activation afin d'acquérir l'information de compteur et/ou d'envoyer le message de commande et/ou de servir de nœud de réseau dans un réseau en vue de la communication de l'information de compteur et/ou du message de commande.

16. Procédé selon l'une des revendications précédentes, **caractérisé en ce que** les informations de compteur de plusieurs dispositifs compteurs (1, 2, 3, 16) auxquels est associée la même position cible (6, 17, 36, 41) sont lues à distances, après l'acquisition des informations de compteur d'une partie de ces dispositifs compteurs (1, 2, 3, 16), la position (12, 14) du dispositif volant (4, 20, 22, 34, 39) et/ou la caractéristique d'orientation (18) étant modifiée en fonction d'une information de position qui décrit la position d'au moins un dispositif compteur (1, 2, 3, 16) dont l'information de compteur n'a pas encore été acquise.

17. Procédé selon l'une des revendications précédentes, **caractérisé en ce que** la modification de la position (12, 14) du dispositif volant (4, 20, 22, 34, 39) et/ou de la caractéristique d'orientation (18) est effectuée de telle sorte que l'information de qualité ou au moins l'une des informations de qualité ou une grandeur dérivée de l'information de qualité ou d'au moins l'une des informations de qualité est maximisée ou minimisée.

18. Procédé selon l'une des revendications précédentes, **caractérisé en ce qu'**une position d'au moins une source de brouillage (9, 32) contribuant aux signaux reçus est déterminée, après quoi la caractéristique d'orientation (18) est modifiée de telle sorte que la sensibilité de réception du dispositif de réception (24) dans la direction de la source de brouillage (9, 32) est réduite, et/ou après quoi la position (12, 14) du dispositif volant (4, 20, 22, 34, 39) est modifiée en fonction de données d'environnement prédéfinies qui décrivent l'environnement du dispositif volant (4, 20, 22, 34, 39) de telle sorte qu'au moins un objet d'environnement (7, 8) décrit par les données d'environnement se trouve entre la source de brouillage (9, 32) et le dispositif volant (4, 20, 22, 34, 39).

19. Procédé selon l'une des revendications précédentes, **caractérisé en ce que** les données d'environnement qui décrivent l'environnement du dispositif volant (4, 20, 22, 34, 39) sont prédéfinies, la position (12, 14) du dispositif volant (4, 20, 22, 34, 39) étant modifiée de telle sorte qu'au moins un objet d'environnement (7, 8) décrit par les données d'environnement est espacé d'une ligne de liaison entre le dispositif de réception (24) et le dispositif compteur (1, 2, 3, 16) et/ou d'un ellipsoïde de rotation dont les foyers sont le dispositif de réception (24) et le dispositif compteur (1, 2, 3, 16) .

20. Procédé selon l'une des revendications précédentes, **caractérisé en ce que** la position cible (6, 17, 36, 41) et/ou l'instant d'exécution des étapes a) à c) et/ou le protocole de communication utilisé pour la communication avec le dispositif compteur (1, 2, 3, 16) et/ou une séquence dans laquelle sont gagnées en vol plusieurs positions cibles (6, 17, 36, 41) auxquelles doivent être acquises des informations de compteur et/ou envoyés des messages de commande sont prédéfinis en fonction d'une information de qualité déterminée dans une itération précédente des étapes a) à c) pour le dispositif compteur (1, 2, 3, 16) associé et/ou en fonction d'une position (12, 14) du dispositif volant (4, 20, 22, 34, 39) et/ou d'une caractéristique d'orientation (18) pour laquelle la condition de qualité était à chaque fois satisfaite dans l'une des itérations précédentes des étapes a) à c) .

21. Procédé selon l'une des revendications précédentes, **caractérisé en ce que** la position cible (6, 17, 36, 41) et/ou le protocole de communication utilisé pour la communication avec le dispositif compteur (1, 2, 3, 16) et/ou une séquence dans laquelle sont gagnées en vol plusieurs positions cibles (6, 17, 36, 41) auxquelles doivent être acquises des informations de compteur et/ou envoyés des messages de commande sont prédéfinis en fonction d'un instant d'exécution des étapes a) à c).

22. Procédé selon l'une des revendications précédentes, **caractérisé en ce que** la prédéfinition de la position cible (6, 17, 36, 41) et/ou la modification de la position (12, 14) du dispositif volant (4, 20, 22, 34, 39) et/ou de la caractéristique d'orientation (18) s'effectue en fonction d'une position du dispositif compteur (1, 2, 3, 16) et/ou au moins d'une source de brouillage (9, 32) qui perturbe la réception de l'information de compteur, la position étant déterminée par le dispositif volant (4, 20, 22, 34, 39) ou par plusieurs dispositifs volants (4, 20, 22, 34, 39) coopérant par triangulation et/ou par détermination d'au moins un temps de propagation d'un signal émis du dispositif compteur (1, 2, 3, 16) et/ou de la source de brouillage (9, 32).

23. Procédé selon l'une des revendications précédentes, **caractérisé en ce qu'**en fonction du message de commande, le dispositif compteur (1, 2, 3, 16) modifie un degré d'ouverture d'une vanne du dispositif compteur (1, 2, 3, 16) et/ou ajuste le réglage d'une horloge interne du dispositif compteur (1, 2, 3, 16) et/ou modifie une grandeur de calcul qui décrit une relation entre la consommation et/ou les données de consommation et l'information de compteur et/ou modifie un fonctionnement d'un programme de commande qui commande le dispositif compteur (1, 2, 3, 16) et/ou modifie un protocole radioélectrique utilisé pour l'envoi de l'information de compteur.

24. Dispositif volant comprenant au moins un dispositif de déplacement (23) destiné à déplacer le dispositif volant (4, 20, 22, 34, 39), au moins un dispositif de réception (24) et un dispositif de commande (25) destiné à commander le dispositif de déplacement (23), **caractérisé en ce que** le dispositif volant (4, 20, 22, 34, 39) est configuré pour mettre en œuvre le procédé selon l'une des revendications précédentes.

25. Dispositif volant selon la revendication 24, **caractérisé en ce que** le dispositif volant (4, 20, 22, 34, 39) est un quadricoptère.

26. Dispositif volant selon la revendication 24 ou 25, **caractérisé en ce que** le dispositif volant (4, 20, 22, 34, 39) possède un dispositif de communication (26) par le biais duquel le données communiquées au dispositif volant (4, 20, 22, 34, 39) par un autre dispositif volant peuvent être retransmises à un deuxième autre dispositif volant et/ou à un dispositif central (5, 33) et/ou inversement.

27. Dispositif volant selon l'une des revendications 24 à 26, **caractérisé en ce que** le dispositif volant (4, 20, 22, 34, 39) possède un dispositif porteur (27) par le biais duquel les envois à délivrer peuvent être maintenus sur le dispositif volant (4, 20, 22, 34, 39) et déposés automatiquement.

28. Dispositif volant selon l'une des revendications 24 à 27, **caractérisé en ce que** le dispositif volant (4, 20, 22, 34, 39) est conçu pour communiquer avec le dispositif compteur (1, 2, 3, 16) par le biais d'au moins deux protocoles de communication différents pouvant être sélectionnés librement, lesquels se différentient, avec une puissance d'émission identique, par les portées et/ou les débits de données pouvant être atteints et/ou par la résistance aux perturbations par rapport à des sources de brouillage (9, 32).

29. Dispositif d'acquisition destiné à relever une consommation, **caractérisé en ce qu'**il comprend plusieurs dispositifs compteurs (1, 2, 3, 16) disposés de manière dispersée par le biais desquels une consommation peut respectivement être relevée et/ou des données de consommation acquises peuvent être collectées, et au moins un dispositif volant (4, 20, 22, 34, 39) selon l'une des revendications 24 à 28 par le biais duquel peuvent être acquises les informations de compteur des dispositifs compteurs (1, 2, 3, 16).
